# NEUE EUROPÄISCHE PATENTSCHRIFT

(11) **EP 2 415 620 B2**
(45) Veröffentlichungstag und Bekanntmachung des Hinweises auf die Entscheidung über den Einspruch: **27.04.2022**
(45) Hinweis auf die Patenterteilung: 22.04.2015
(21) Anmeldenummer: 11006270.0
(22) Anmeldetag: 29.07.2011
(51) Int. Cl.: B60D 1/06, B60D 1/30, B60D 1/58

(54) **Anhängekupplung mit einem Sensor**
Trailer coupling with a sensor
Attelage doté d'un capteur

(30) Priorität: 06.08.2010 DE 102010033641; 26.10.2010 DE 102010049614; 12.04.2011 DE 202011005144 U
(43) Veröffentlichungstag der Anmeldung: 08.02.2012
(60) Teilanmeldung: 15158760.7
(73) Patentinhaber: WESTFALIA - Automotive GmbH, 33378 Rheda-Wiedenbrück (DE)
(72) Erfinder: Sielhorst, Bernhard, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 2 332 750
- EP-A1- 2 332 750
- DE-A1-102008 040 866
- DE-A1-102009 057 871
- DE-A1-102010 010 242
- GB-A- 2 342 630
- US-A- 3 947 839

## Beschreibung

Die Erfindung betrifft eine Anhängekupplung für ein Kraftfahrzeug, insbesondere ein Personen-Kraftfahrzeug, zum Anhängen eines Anhängers an das Kraftfahrzeug, gemäß dem Oberbegriff des Anspruchs 1.

Eine derartige Anhängekupplung ist z.B. in DE 10 2010 011 741 beschrieben.

Aus GB 2342630 A und EP 2 332 750 A1 gehen Anhängekupplungen hervor, bei denen einen Mitnehmer zur Betätigung eines Drehwinkelsensors am Kugelkopf angeordnet ist.

Die bekannte Anhängekupplung weist einen optischen Sensor auf, der aktiv quasi die Zugkupplungsaufnahme beleuchtet, wobei dieser das Licht zu einem in der Sensoraufnahme angeordneten optischen Sensor reflektiert. Der Sensor erzeugt ein Winkelsignal in Abhängigkeit von einer Winkelstellung der Zugkupplungsaufnahme relativ zum Kuppelkörper, in diesem Fall einer Kupplungskugel.

Die Erfassung einer Winkelstellung des Anhängers relativ zum Zugfahrzeug kann für vielfältige Zwecke genutzt werden, beispielsweise um ein Rückwärtseinparken des Gespanns zu erleichtern, um Maßnahmen zur Erhöhung der Fahrstabilität des Gespanns herzustellen oder dergleichen.

Das Messsystem zur Erfassung von Winkellagen des Anhängers relativ zum Zugfahrzeug sollte allerdings zweckmäßigerweise einen möglichst einfachen Aufbau haben und die tragenden Komponenten, beispielsweise einen Kupplungsarm mit am freien Ende angeordneter Kupplungskugel, nicht schwächen. Darüber hinaus ist es vorteilhaft, wenn die Montage einfach ist, d.h. die zur Winkelerfassung erforderlichen Komponenten an der Anhängekupplung einfach montierbar sind, möglichst auch nachträglich, so dass eine vorhandene Anhängekupplung mit dem Winkelerfassungssystem nachgerüstet werden kann.

Es ist also die Aufgabe der vorliegenden Erfindung, eine Anhängekupplung mit einem zuverlässigen, insbesondere einfach montierbaren, System zur Winkelerfassung der Zugkupplung relativ zur Anhängekupplung bereitzustellen.

Zur Lösung der Aufgabe sind Anhängekuppulungen gemäß der techrischen Lehren der Ansprüche 1, 16, 17, 18, und 19 vorgesehen.

Der Kuppelkörper weist bei der Lösung nach Anspruch 1 eine Sensoraufnahme auf, in der eine Komponente einer Sensoranordnung, nämlich mindestens ein Sensor, zur Erfassung einer Winkelstellung der Zugkupplung relativ zu dem Küppelkörperträger angeordnet oder anordenbar ist

Beispielswese ist mindestens ein Sensor, zum Beispiel ein optischer Sensor, ein induktiver oder magnetischer Sensor oder dergleichen ortsfest am Kuppelkörper, beispielsweise in der Sensoraufnahme, angeordnet, während einer oder mehrere Geber an dem Mitnehmerkörper angeordnet sind. Es ist aber prinzipiell auch möglich, dass beispielsweise ein Sensor am Mitnehmerkörper angeordnet ist, der von einem ortsfest am Kuppelkörper, zum Beispiel in der Sensoraufnahme, angeordneten Geber betätigbar ist. Bei dem Geber handelt es sich beispielsweise um eine Lichtquelle, einen Magneten, oder dergleichen.

Bei einem am Kuppelkörper angeordneten Mitnehmerkörper sind die folgenden Maßnahmen zweckmäßig:

Der Mitnehmerkörper kann beispielsweise ein einteiliger Ring sein. Es ist aber auch möglich, dass der Mitnehmerkörper mehrteilig ist. Weiterhin ist es vorteilhaft, wenn der Mitnehmerkörper als ein Ring ausgebildet ist, der mehrere Ringsegmente aufweist. Die Segmente des Mitnehmerkörpers, insbesondere die Ringsegmente, können beispielsweise durch einmal verschließbare Verbindungen miteinander verbunden sein, z.B. Tannenbaumschrägen, Clipse oder dergleichen. Beispielsweise ist eine Verbindung der Segmente des Mitnehmerkörpers in der Art von Kabelbinder-Verbindungen möglich. Aber auch sonstige Fügemethoden, z.B. Vernieten, Schrauben, Kleben, miteinander Verclipsen oder Verrasten oder dergleichen sind bei Segmenten eines erfindungsgemäßen Mitnehmerkörpers ohne Weiteres möglich.

Ringsegmente eines Mitnehmerkörpers gemäß der Erfindung können beispielsweise miteinander verklammert werden. Auch ein Verschrauben oder Verhaken ist ohne weiteres möglich. Es ist auch möglich, dass bei einem mindestens zwei oder mehrere Radiallagen umfassenden Mitnehmerkörper Radiallagen durch Rastverbindungen, Verklammern, Haken oder dergleichen miteinander verbunden sind.

Eine weitere Ausführungsform der Erfindung sieht vor, dass zwei oder mehr Ringsegmente durch eine Klammer zusammengehalten werden, wobei die Klammer beispielsweise in Umfangsrichtung einen Schlitz oder eine Ausnehmung umfasst. Der Ring bzw. die Klammer erstreckt sich über einen größten Umfang eines durch die Ringsegmente gebildeten Mitnehmer-Rings weg.

Wie aus dem obigen deutlich wird, kann der Mitnehmerkörper zwar einstückig sein, gegebenenfalls beispielsweise auch Aufnahmen zum Aufnehmen eines Sensors, eines Gebers für den Sensor oder dergleichen, umfassen. Weiterhin ist es möglich, dass der Mitnehmerkörper in Umfangsrichtung mehrteilig ist, zumindest in einer Radialebene, d.h. dass er in einer Radialebene oder insgesamt beispielsweise 2 oder mehr Ringsegmente umfasst.

Der Mitnehmerkörper kann aber auch radial gesehen, d.h. von innen nach außen bzw. umgekehrt, mehrere Schichten oder Komponenten umfassen. Beispielsweise kann eine innere Ebene oder Schicht als Gleitschicht oder Lagerschicht bzw. -ebene ausgestaltet sein, während eine äußere Ebene oder Schicht als Mitnahmeschicht oder -ebene, mithin also als Mitnehmer, ausgestaltet ist. Die äußere Schicht oder Komponente oder Lage soll nämlich einen möglichst festen Halt der Zugkupplung am Mitnehmerkörper, möglichst ohne Schlupf, ermöglichen. Die Reibung sollte also entsprechend hoch sein. Innen, im Kontaktbereich mit dem Kuppelkörper, ist jedoch eine geringe Reibung bevorzugt, so dass dort beispielsweise eine Gleitschicht angeordnet ist. Selbst verständlich ist es auch möglich, dass der Mitnehmerkörper ein Rollen- oder Walzenlager umfasst, mit dem er drehbar am Kuppelkörper gelagert ist.

Ein Aufbau des Mitnehmerkörpers in Schichten oder in mehreren Lagen ermöglicht es, verschiedene Materialien mit jeweils optimalen Eigenschaften zu kombinieren. So kann beispielsweise eine in Kontakt mit dem Kuppelkörper befindliche Komponente des Mitnehmerkörpers vorteilhaft die vorgenannte gute Gleiteigenschaft aufweist.

Eine Schicht oder Komponente des Mitnehmerkörpers, die zum Halten oder Aufnehmen eines Sensors oder eines Gebers zum Betätigen des Sensors ausgestaltet ist, ist vorteilhaft relativ biegesteif. Diese Schicht oder Komponente des Mitnehmerkörpers kann mit Vorteil den Sensor oder Geber gut halten und/oder schützen.

Es ist auch möglich, dass der Mitnehmerkörper mehrere Komponenten umfasst, von denen manche Ringsegmente bilden, die vor Ort, d.h. bei der Montage, am Kuppelkörper miteinander verbunden werden, d.h. dass die jeweiligen Ringsegmente relativ biegesteif sein können und so beispielsweise ohne Probleme auch in eine Führungsnut am Kuppelkörper eingesetzt werden können. Andere Komponenten des Mitnehmerkörpers, beispielsweise ein zahnriemenartiger Mitnehmer, der radial außen angeordnet ist, sind zweckmäßigerweise einstückig. Beispielsweise kann ein ringartiger Mitnehmer als Ganzes auf bereits am Kuppelkörper montierte Komponenten des Mitnehmerkörpers aufgebracht werden oder beispielsweise auch in diese bereits montierten Komponenten eingebracht werden. So ist beispielsweise ein Träger des Mitnehmerkörpers aus 2 oder mehreren Ringsegmenten gebildet, die miteinander verbunden und am Kuppelkörper montiert werden. Auf diesen Träger können dann einer oder mehrere weitere Ringe, die jedoch dehnbar sind, aufgebracht werden.

Vorteilhaft ist es beispielsweise, dass die äußere Komponente, d.h. beispielsweise ein Mitnehmer, der von der Zugkupplungsaufnahme beispielsweise formschlüssig oder reibschlüssig mitgenommen werden soll, dehnbar oder aufweitbar ist, so dass er an dem bereits am Kuppelkörper befindlichen Träger montierbar ist, beispielsweise in eine Nut dieses Trägers einsetzbar ist oder am Außenumfang des Trägers befestigbar ist, zum Beispiel anklebbar.

Es versteht sich, dass an bereits am Kuppelkörper montierten oder montierbaren Ringsegmenten oder an mindestens einer anderen, auch einstückigen und ringförmigen Komponente des Mitnehmerkörpers einer oder mehrere Mitnehmer, die von der zu Kugelkupplung mitgenommen werden können, angeordnet sein können. So können beispielsweise elastische Mitnahmevorsprünge, z.B. Dorne, Zähne oder dergleichen, vor einen an sich relativ biegesteifen Träger vorstehen. Der Träger kann beispielsweise eines oder mehrere Ringsegmente umfassen.

Der einstückige oder mehrere Ringsegmente umfassende Träger kann beispielsweise an sich ringförmig sein, während die von der Zugkugelkupplung mitzunehmende bzw. mit der Zugkugelkupplung in Kontakt kommende Komponente, der eigentliche Mitnehmer, zwar in einer Ausführungsform der Erfindung als ein einstückiger oder mehrere Ringsegmente umfassender Mitnehmerring ausgestaltet sein kann, in einer anderen Ausführungsformen der Erfindung jedoch auch einzelne Mitnehmerelemente umfassen kann, die an einem drehbar am Kupplungskörper gelagerten Träger angeordnet sind.

Eine Mehrteiligkeit des Mitnehmerkörpers ist insbesondere dann zweckmäßig, wenn dieser an sich oder Komponenten des Mitnehmerkörpers relativ biegesteif sind. Aber auch dann, wenn der Mitnehmerkörper und/oder dessen Segmente eine gewisse Elastizität aufweisen, ist das vorgenannte Verbinden von Segmenten ohne Weiteres zweckmäßig.

Bevorzugt ist der Mitnehmerkörper elastisch verformbar. Beispielsweise ist der Mitnehmerkörper durch die Zugkupplung selbst, insbesondere die Kupplungsaufnahme, eine Schließbacke oder dergleichen der Zugkupplung verformbar. Weiterhin ist es vorteilhaft, wenn der Mitnehmerkörper im Sinne eines Aufweitens für die Montage an dem Kuppelkörper elastisch verformbar ist.

Somit kann der Mitnehmerkörper quasi über den Kuppelkörper übergestreift werden.

Es ist auch möglich, dass der Mitnehmerkörper oder ein Mitnehmer, der zum Kontakt mit der Zugkupplung vorgesehen ist, wenn er durch die Zugkupplung verformt ist, eine andere Geometrie aufweist, als im unverformten Zustand. Beispielsweise ist der Mitnehmer oder Mitnehmerkörper ohne Kraftbeaufschlagung im Wesentlichen kreisringförmig, nimmt jedoch eine ovale oder elliptische Form an, wenn er durch die Zugkupplung, insbesondere deren Schließbacke beaufschlagt ist. Durch die Elastizität ist es beispielsweise möglich, dass der Mitnehmerkörper formschlüssig an der Zugkupplung, insbesondere der Kupplungsaufnahme, formschlüssig anliegt. Aber auch ein kraftschlüssiges oder reibschlüssiges Anliegen ist ohne Weiteres möglich.

Der erfindungsgemäße Mitnehmerkörper weist zweckmäßigerweise einen radial innen bezüglich des Kuppelkörpers angeordneten Träger und einen radial außen bezüglich des Kuppelkörpers an dem Träger angeordneten Mitnehmer auf, beispielsweise einen Mitnehmerring, wobei der Mitnehmer zur Drehmitnahme durch die Zugkupplungsaufnahme vorgesehen ist.

Der Träger kann beispielsweise mehrteilig sein, beispielsweise zweiteilig. Der Träger umfasst beispielsweise miteinander verbundene Ringsegmente. Die Verbindung des Trägers miteinander kann auch durch den Mitnehmer, insbesondere wenn er als Mitnehmerring ausgestaltet ist, bewirkt sein. Bevorzugt ist es jedoch, wenn die Ringsegmente des Trägers miteinander direkt verbunden sind, beispielsweise durch Rastvorsprünge, Haken oder dergleichen. Es versteht sich, dass die Ringsegmente auch miteinander verklebt oder verschweißt sein können.

Der Mitnehmer selbst ist zweckmäßigerweise als ein auswechselbares Bauteil ausgestaltet, so dass er bei Verschleiß entfernt und am Träger ein unverschlissener Mitnehmer befestigbar ist. Der Träger weist beispielsweise eine Aufnahme für den Mitnehmer auf. Die Aufnahme ist beispielsweise als eine Ringnut ausgestaltet. Der Mitnehmer ist vorteilhaft mit dem Träger verrastbar und/oder verklemmbar und/oder verklebt.

Es ist z.B. möglich, dass an dem Mitnehmer eine Klebeschicht angeordnet ist, die vorteilhaft durch eine Schutzfolie abgedeckt ist. Nach Abziehen der Schutzfolie liegt die Klebeschicht frei und der Mitnehmer kann auf den Träger aufgeklebt werden.

Weiterhin ist es vorteilhaft, wenn am Träger und Mitnehmer kooperierende Drehmitnahmemittel, z.B. mindestens ein Drehmitnahmevorsprung am einen Bauteil (Träger oder Mitnehmer), der in eine Drehmitnahmeaufnahme am andern Bauteil (Mitnehmer oder Träger) eingreift, vorgesehen sind.

Zwischen dem Mitnehmer und dem Träger ist zweckmäßigerweise eine Kompressionsschicht vorgesehen. Die Kompressionsschicht besteht oder enthält ein leicht komprimierbares Material, zum Beispiel Polyurethan. Beispielsweise ist die Kompressionsschicht am Boden der Aufnahme für den Mitnehmer vorgesehen. Die Kompressionsschicht kann einen Bestandteil des Trägers und/oder des Mitnehmers bilden oder vom Träger und Mitnehmer separat sein.

Die Kompressionsschicht ist radial nachgiebig, so dass der Mitnehmer unter Komprimierung der Kompressionsschicht in Richtung des Trägers verformbar ist, also nachgibt. Bei dieser Konstruktion können beispielsweise der Träger und der Mitnehmer relativ hart und/oder biegesteif sein, also verschleißfest. Die Nachgiebigkeit ist quasi im Innern des Mitnehmerkörpers vorgesehen, zwischen dem Träger und dem Mitnehmer.

Der Mitnehmer oder die Schicht des Mitnehmerkörpers, die in Kontakt mit der Zugkupplungsaufnahme tritt, besteht beispielsweise aus einem relativ abriebfesten Material, z.B. aus einer insbesondere 2mm starken PU Folie in 85 Shore A oder bis zu 95 Shore A mit großen Reißdehnung, zum Beispiel größer als 400-500, insbesondere größer als 600. Eine weitere Lage des Mitnehmers kann beispielsweise aus Sylomer bestehen oder ein solches Material umfassen.

Der Mitnehmerkörper ist zweckmäßigerweise riemenartig oder umfasst einen Riemen.

Bevorzugt hat der Mitnehmerkörper nach radial außen vorstehende Mitnahmevorsprünge und/oder eine Reibschlussfläche.

Der Mitnehmerkörper ist vorzugsweise in der Art eines Zahnriemens ausgestaltet.

Die Mitnahmevorsprünge sind zweckmäßigerweise flexibel oder elastisch oder beides. Somit können die Mitnahmevorsprünge durch die Zugkupplung, insbesondere die Zugkupplungsaufnahme, verformt werden, so dass sie flexibel und elastisch an deren Innenoberfläche anliegen. Die Mitnahmevorsprünge, auch in nicht elastischer Ausführung, und/oder ebenfalls vorteilhafte Schlitze am Mitnahmekörper haben auch den Vorteil, dass Verschmutzungen, z.B. Sand, Dreck oder sonstige Materialien, zwischen die Mitnahmevorsprünge gelangen können und so keine direkte Kraft auf im Innern des Mitnehmerkörpers befindliche Komponenten, z.B. die nachfolgend noch beschriebenen Magnete, ausüben können. Beispielsweise ist der Mitnehmerkörper geschlitzt, so dass dadurch Mitnahmevorsprünge gebildet sind.

Der Mitnehmerkörper und/oder ein Lagerbereich des Kuppelkörpers zum Lagern des Mitnehmerkörpers sind zweckmäßigerweise mit einer

Gleitbeschichtung oder einer Gleitlage versehen. Dadurch ist das Drehen des Mitnehmerkörpers an dem Kuppelkörper erleichtert.

Bevorzugt ist eine Lageraufnahme für den Mitnehmerkörper vorhanden, so dass dieser an dem Kuppelkörper geführt und gelagert ist. Bei der Lageraufnahme handelt es sich vorzugsweise um eine Vertiefung, beispielsweise um eine Führungsnut. Besonders bevorzugt ist eine Ringnut. Die Sensoraufnahme und die Lageraufnahme gehen zweckmäßigerweise ineinander gegenüber. Beispielsweise schneidet die Lageraufnahme die Sensoraufnahme. Somit wird der Mitnehmerkörper direkt an der Sensoraufnahme vorbeigeführt, so dass er den Sensor in der Sensoraufnahme beeinflussen kann. Es ist aber auch denkbar, dass die Lageraufnahme neben der Sensoraufnahme angeordnet ist und der Mitnehmerkörper dennoch den Sensor beeinflusst, so dass dieser eine Relativposition des Mitnehmerkörpers zum Kuppelkörper und somit eine Winkellage der Zugkupplung zur Anhängekupplung, ermitteln kann.

Bevorzugt weist der Mitnehmerkörper außenseitig eine ballige Kontur auf. Die Außenkontur ist dabei diejenige Kontur, die in Kontakt mit der Zugkupplungsaufnahme gelangt. Wenn also beispielsweise ein Bremspad einer Schlingerkupplung an der erfindungsgemäßen Anhängekupplung montiert wird, hat dieser an dem Mitnehmerkörper keine oder jedenfalls nur eine geringe Angriffsfläche, so dass er vertikal über den insbesondere ringförmigen Mitnehmerkörper rutschen kann, ohne ihn abzuscheren.

Es versteht sich, dass zweckmäßigerweise der Mitnehmerkörper mit seiner Außenkontur an die Außenkontur des Kuppelkörpers angepasst ist, auch wenn Mitnahmevorsprünge des Mitnehmerkörpers vor den Kuppelkörper vorstehen. Beispielsweise sind die Mitnahmevorsprünge gerundet oder haben einen Schrägverlauf der Art, dass sie nahezu mit der Außenkontur des Kuppelkörpers fluchten, vor diese jedoch zur Drehmitnahme durch die Zugkupplungsaufnahme vorstehen.

Die Lageraufnahme ist zweckmäßigerweise an mindestens einem Bereich so tief, dass sie einen Abschnitt des Mitnehmerkörpers, der dort von der Lageraufnahme aufgenommen ist, vollständig aufnehmen kann. Somit steht dieser Abschnitt des Mitnehmerkörpers nicht vor der Lageraufnahme nach außen vor. Beispielsweise handelt es sich bei diesem Abschnitt um in Fahrtrichtung vordere oder hintere Abschnitt der Lageraufnahme, in die der Mitnehmerkörper quasi vollständig von der Zugkupplung hinein verdrängt werden kann.

Bevorzugt ist ein magnetisches Prinzip, d.h. der Sensor umfasst einen oder mehrere Sensorkomponenten, die magnetisch aktivierbar sind. Beispielsweise handelt es sich bei dem Sensor um einen magnetisch resistiven Sensor, insbesondere einen GMR- oder AMR-Sensor. Es versteht sich, dass die Erfindung nicht auf magnetische Sensoren beschränkt ist, d.h. dass beispielsweise auch optische Sensoren möglich sind, was später noch deutlich wird.

In Zusammenwirkung mit dem magnetischen Sensor und der magnetischen Sensoranordnung weist der Mitnehmerkörper zweckmäßigerweise eine Magnetanordnung mit einem oder mehreren Magneten auf. Wenn mehrere Magnete vorhanden sind, sind ihre Pole zweckmäßigerweise in Umfangsrichtung des Mitnehmerkörpers zueinander beabstandet. Beispielsweise sind mehrere Magnete, insbesondere zwei oder mehr Magnete, in Umfangsrichtung hintereinander angeordnet, wobei die Polarität der Magnete zweckmäßigerweise gleich orientiert ist, d.h. dass ein Südpol des einen Magneten neben einem Nordpol des benachbarten Magneten angeordnet ist. Es versteht sich, dass jedoch auch eine umgekehrte Magnetisierung möglich ist, d.h. dass einander gegenüberliegende Südpole oder Nordpole vorgesehen sind. Weiterhin ist es denkbar, einen ringförmigen Magneten vorzusehen.

Der Mitnehmerkörper umfasst zweckmäßigerweise mindestens eine Aufnahme, vorteilhaft eine Anordnung von Aufnahmen, die zum Aufnehmen mindestens eines Gebers, zum Beispiel eines Magneten, oder zur Aufnahme eines Sensors ausgestaltet sind. Diese mindestens eine Aufnahme ist zweckmäßigerweise an einem Innenumfang des Mitnehmerkörpers angeordnet. Beispielsweise ist die mindestens eine Aufnahme als Steckaufnahme oder Tasche ausgestaltet. Somit können der Geber oder der Sensor in eine jeweilige Steckaufnahme eingesteckt werden. Bevorzugt sind Rastmittel zum Verrasten des jeweiligen Gebers oder Sensors in der Aufnahme des Mitnehmerkörpers vorgesehen. Bevorzugt ist es, dass der Geber oder Sensor auswechselbar am Mitnehmerkörper aufgenommen ist. An dieser Stelle sei bemerkt, dass selbstverständlich ein Geber oder Sensor auch fest mit dem Mitnehmerkörper verbunden sein kann, beispielsweise verklebt oder in ein Material des Mitnehmerkörpers eingegossen oder eingebettet sein kann.

Des Weiteren kann der Mitnehmerkörper auch aus einem magnetischen Kunststoffmaterial bestehen oder einem magnetisierbaren Kunststoffmaterial.

Es ist aber auch möglich, dass der Mitnehmerkörper einen optischen Geber, z.B. eine Reflektionsmarkierung, einen Strichcode oder dergleichen aufweist, mit der der Sensor, in diesem Fall ein optischer Sensor, zusammenwirkt.

Bevorzugt besteht der Mitnehmerkörper oder eine Komponente des Mitnehmerkörpers ganz oder im Wesentlichen aus einem thermoplastischen Polyurethan (PU), insbesondere mit vernetzter Struktur (TPUX). Vorteilhaft ist jedenfalls ein elastisches Kunststoffmaterial.

Die Magnetisierung des Mitnehmerkörpers kann beispielsweise anhand von magnetischem Material, z.B. Metallsplittern, seltenen Erden oderdergleichen, erfolgen.

Die Sensoranordnung umfasst zweckmäßigerweise mindestens eine Lichtquelle, deren Licht-Austrittsbereich zum Mitnehmerkörper hin gerichtet ist, so dass durch diesen Licht reflektierbar ist. Ein Licht-Erfassungsbereich des mindestens einen optischen Sensors ist so ausgerichtet, dass er zur Erfassung des reflektierten Lichts geeignet ist.

Die Sensoranordnung weist - unabhängig davon, ob sie einen magnetischen, optischen oder auf einem sonstigen Messprinzip arbeitenden Sensor aufweist - zweckmäßigerweise Signalmittel zur Erzeugung eines eine Winkelstellung des Mitnehmerkörpers relativ zu dem Kuppelkörperträger anzeigenden Winkelsignals anhand eines Messsignals auf, das von dem mindestens einen beispielsweise optischen oder magentischen Sensor anhand durch den Mitnehmerkörper erzeugten Signalen, z.B. reflektiertem Licht, Magnetfeldänderungen oder dergleichen, erzeugbar ist.

Die Signalmittel sind zweckmäßigerweise zur Berechnung von Koordinatendaten, beispielsweise Winkel-Koordinatendaten, anhand von Geschwindigkeitsdaten des mindestens einen Sensors ausgestaltet. Der Sensor misst also eine Winkeländerung des Mitnehmerkörpers relativ zum Kuppelkörper, um anhand dieses Geschwindigkeitssignals wiederum Winkel-Koordinatendaten zu ermitteln.

Weiterhin ist es vorteilhaft, wenn die Anhängekupplung eine Busschnittstelle oder eine sonstige elektrische Schnittstelle zur Ankopplung an das Bordnetz des Kraftfahrzeugs zur Übertragung des Winkelsignals aufweist. Die Busschnittstelle ist beispielsweise eine CAN-Schnittstelle (Controller Area Network), eine LIN-Schnittstelle (Local Interconnect Network) oder dergleichen.

Der mindestens eine Sensor - es können auch mehrere Sensoren vorgesehen sein - ist in der Sensoraufnahme des Kuppelkörpers angeordnet. In der Sensoraufnahme des Kuppelkörpers könnte aber auch ein Geber zur Betätigung eines oder mehrerer in dem Mitnehmerkörper angeordneten Sensoren angeordnet sein. Von der Sensoraufnahme führt beispielsweise ein Anschlusskanal und oder ein Montagekanal beispielsweise zu einer Auswerteeinrichtung zur Auswertung von Sensorsignalen des mindestens einen Sensors. Selbstverständlich könnte auch eine drahtlose Übertragung zwischen Sensor und Auswerteeinrichtung vorgesehen sein. Weiterhin ist es denkbar, dass der Sensor eine Auswerte Einrichtung aufweist und diese beispielsweise mit dem Bordnetz des Kraftfahrzeugs direkt, drahtlos, zum Beispiel über Funk, oder auch leitungsgebunden, kommuniziert.

Eine andere, an sich eine eigenständige Erfindung darstellende Ausführungsform - bei der auch kein Mitnehmerkörper oder kein ringförmiger Mitnehmerkörper vorgesehen sein kann - sieht vor, dass die Sensoraufnahme mit einem von dem Kuppelkörperträger zu der Sensoraufnahme des Kuppelkörpers führenden Anschlusskanal zur Aufnahme einer Verbindungsleitung zu dem mindestens einen Sensor verbunden ist, und dass zwischen dem Anschlusskanal und einer Außenoberfläche des Kuppelkörperträgers oder des Kuppelkörpers mindestens ein Montagekanal zur Montage mindestens eines Bauteils der Sensoranordnung und/oder der Verbindungsleitung in der Sensoraufnahme und/oder in dem Anschlusskanal verläuft.

Ein Grundgedanke der obigen Lösung ist es, dass nicht nur ein Anschlusskanal vorhanden ist, durch den beispielsweise die Verbindungsleitung in Richtung der Sensoraufnahme geführt werden kann, sondern auch ein zusätzlicher Montagekanal, der quasi von dem Anschlusskanal abzweigt oder in diesen einmündet. Der mindestens eine Montagekanal selbst mündet an der Außenoberfläche des Kuppelkörperträgers oder des Kuppelkörpers selbst aus (beides ist denkbar). Durch den mindestens einen Montagekanal kann beispielsweise ein Montagewerkzeug zur Montage des Sensors oder der Verbindungsleitung geführt werden.

Bevorzugt ist der Kuppelkörper etwa kugelig oder bildet eine Kugel. Diese Kugel kann oberseitig abgeflacht sein, wie es bei Normkugeln üblich ist. Beispielsweise bildet der Kuppelkörperträger einen Kupplungsarm oder weist einen solchen auf.

Die Sensoraufnahme und/oder der Montagekanal und/oder der Anschlusskanal sind zweckmäßigerweise mittels einer Abdeckung verschlossen. Diese Abdeckung kann vorteilhaft zur Oberfläche des Kuppelkörpers fluchtend sein. Somit ergibt sich oberseitig, d.h. in einem Kontaktbereich zwischen der Anhängekupplung und der Zugkupplungsaufnahme eine durchgängige Kontur. Die Sensoraufnahme ist verschlossen. Ein Eindringen von Schmutz in beispielsweise den Montagekanal, die Sensoraufnahme oder dergleichen, wird vermieden.

Der Anschlusskanal ist zweckmäßigerweise mehrteilig bzw. weist mehrere Kanalabschnitte auf. Beispielsweise hat der Anschlusskanal einen ersten und einen zweiten Anschlusskanalabschnitt, die zueinander winkelig, insbesondere rechtwinkelig, verlaufen. Beispielsweise verlaufen die Anschlusskanalabschnitte zueinander rechtwinkelig. Es ist aber auch möglich, dass zwischen dem ersten und zweiten Anschlusskanalabschnitt ein gekrümmter, bogenförmiger Kanalabschnitt angeordnet ist. Gerade Anschlusskanäle haben jedoch den Vorteil, dass sie durch einfache Bohrwerkzeuge herstellbar sind. Es versteht sich, dass dies sinngemäß auch für den oder die Montagekanäle gilt, d.h. dass diese zweckmäßigerweise einen linearen Verlauf aufweisen, vorteilhaft über ihre gesamte Länge. Aber auch bei einem Montagekanal ist es vorteilhaft, wenn er mehrere Montagekanalabschnitte aufweist, die zueinander winkelig sein können.

Bevorzugt sind zu den ersten und zweiten (oder weiteren) Anschlusskanalabschnitten fluchtende Montagekanäle vorgesehen. Beispielsweise fluchtet der mindestens eine Montagekanal mit dem ersten Anschlusskanalabschnitt, während ein zweiter Montagekanal mit dem zweiten Anschlusskanalabschnitt fluchtet.

Vorteilhaft ist vorgesehen, dass der mindestens eine Montagekanal mit dem Anschlusskanal zwischen dem ersten Anschlusskanalabschnitt und dem zweiten Anschlusskanalabschnitt verbunden ist

Zweckmäßig ist auch, wenn vorgesehen ist, dass der mindestens eine Montagekanal mit dem ersten Anschlusskanalabschnitt und/oder ein zweiter Montagekanal mit dem zweiten Anschlusskanalabschnitt fluchtet und/oder dass der erste Anschlusskanalabschnitt und der mindestens eine erste Montagekanal einen ersten, insbesondere einen konstanten Querschnitt aufweisenden, Durchgangskanal bilden und/oder der zweite Anschlusskanalabschnitt und der zweite Montagekanal einen zweiten Durchgangskanal bilden und/oder sich der erste Durchgangskanal und der zweite Durchgangskanal, insbesondere rechtwinkelig, kreuzen.

Die Durchgangskanäle weisen vorteilhaft denselben und/oder einen konstanten Querschnitt auf.

Der erste Anschlusskanalabschnitt und/oder der erste Montagekanal verlaufen vorteilhaft etwa in einer Vertikalebene, insbesondere einer Vertikalmittelebene oder im Zentrumsbereich des Kuppelkörpers. Zweckmäßig ist auch, wenn der zweite Anschlusskanalabschnitt und/oder der zweite Montagekanal etwa in einer Horizontalebene, insbesondere etwa im Bereich einer Äquatorialebene, des Kuppelkörpers verlaufen.

Vorteilhaft ist vorgesehen, der Anschlusskanal einen Halsabschnitt des Kuppelkörperträgers durchsetzt, der zwischen dem Kuppelkörper und einem Armabschnitt des Kuppelkörperträgers angeordnet ist.

Vorteilhaft ist vorgesehen, dass die Sensoraufnahme eine an einen magnetischen Feldverlauf angepasste Geometrie und/oder eine kugelige oder trompetenförmige und/oder langgestreckte Gestalt und/oder eine Freimachung aufweist, so dass der Sensor mit einem Abstand zu einer Innenwand der Sensoraufnahme in der Sensoraufnahme angeordnet werden kann.

Der erste Anschlusskanalabschnitt und der mindestens eine erste Montagekanal bilden zweckmäßigerweise einen ersten Durchgangskanal. Dieser Durchgangskanal hat zweckmäßigerweise einen konstanten Querschnitt. Auch bei dem zweiten Anschlusskanalabschnitt und dem zweiten Montagekanal ist es vorteilhaft, wenn sie einen konstanten, insbesondere durchgängig konstanten, Querschnitt aufweisen. Es versteht sich, dass bei einem Anschlusskanalabschnitt oder einem Montagekanal oder einer Kombination derselben auch unterschiedliche Kanalquerschnitte möglich sind. Weiterhin ist es denkbar, dass kontinuierlich sich über eine Längslänge eines jeweiligen Kanals verändernde Querschnitte vorhanden sind, beispielsweise konische und/oder taillierte Verläufe oder dergleichen.

Der erste Durchgangskanal und der zweite Durchgangskanal kreuzen sich zweckmäßigerweise. Beispielsweise bilden die Durchgangskanäle ein Kreuz. Der erste Durchgangskanal durchsetzt zweckmäßigerweise den zweiten Durchgangskanal. Dies bedeutet, dass sich die Durchgangskanäle vorteilhaft mit ihrem vollen Durchmesser kreuzen. Es ist aber auch möglich, dass der erste Durchgangskanal und der zweite Durchgangskanal sich nur peripher oder tangential schneiden.

Bevorzugt verlaufen der erste Anschlusskanalabschnitt und/oder der erste Montagekanal etwa in einer Vertikalebene. Die Vertikalebene ist beispielsweise eine Vertikalmittelebene. Bevorzugt verlaufen der erste Anschlusskanalabschnitt und/oder der erste Montagekanal etwa im zentralen Bereich des Kuppelkörpers. Der zweite Anschlusskanalabschnitt und/oder der zweite Montagekanal verlaufen vorteilhaft etwa in einer Horizontalebene. Hier versteht sich, dass die Ebene auch schräg verlaufen kann. Jedenfalls ist es vorteilhaft, wenn der zweite Anschlusskanalabschnitt und/oder der zweite Montagekanal etwa im Bereich einer Äquatorialebene des Kuppelkörpers verlaufen. Der erste Montagekanal mündet beispielsweise in einem Bereich des Kuppelkörpers aus, der bei Gebrauch der Anhängekupplung nicht durch die Zugkupplungsaufnahme belastet ist bzw. von dieser frei ist. Bei diesem Bereich handelt es sich beispielsweise um die Oberseite des Kuppelkörpers. Weiterhin ist es vorteilhaft, wenn der erste Montagekanal an einer abgeflachten Seite, hier ebenfalls zweckmäßigerweise der Oberseite, des Kuppelkörpers ausmündet. Somit ist also der Montagekanal an seinem Ausmündungsbereich zur Außenoberfläche des Kuppelkörpers frei.

Der erste Anschlusskanal durchsetzt zweckmäßigerweise einen Halsabschnitt des Kuppelkörpers, der zwischen dem Kuppelkörper und einem Armabschnitt des Kuppelkörperträgers angeordnet ist. Vorzugsweise verläuft der erste Anschlusskanal in etwa vertikal vom Kuppelkörperträger durch den Halsabschnitt hindurch in den Kuppelkörper hinein. Der erste Anschlusskanal wird zweckmäßigerweise durch den ersten Montagekanal verlängert, der sich dann bis zur Oberseite des Kuppelkörpers, die zweckmäßigerweise abgeflacht ist, erstreckt.

Bei der Sensoraufnahme ist es vorteilhaft, eine an einen magnetischen Feldverlauf angepasste Geometrie vorzusehen. Bevorzugt hat die Sensoraufnahme eine kugelige oder trompetenförmige Gestalt. Auch eine langgestreckte Gestalt der Sensoraufnahme ist vorteilhaft. Beispielsweise ist die Sensoraufnahme langgestreckt zwischen der Außenoberfläche des Kuppelkörpers und dem mit der Sensoraufnahme kommunizierenden bzw. verbundenen Anschlusskanal(-abschnitt).

Weiterhin ist es vorteilhaft, wenn die Sensoraufnahme eine Freimachung aufweist, so dass der Sensor mit einem Abstand zu einer Innenwand der Sensoraufnahme in der Sensoraufnahme angeordnet werden kann oder angeordnet ist. Mithin hat der Sensor also einen Abstand zur Innenwand, was einen günstigen Feldverlauf von Magnetlinien ermöglicht. Die Freimachung oder ein Abstand zu einer Innenwand der Sensoraufnahme ist aber selbstverständlich entbehrlich, wenn beispielsweise das Material des Kuppelkörpers nicht magnetisch ist, z.B. aus Kunststoff, nicht magnetisierbarem Stahl, Aluminium oder dergleichen. Dabei ist zu bemerken, dass dieser Werkstoff nur im Bereich der Sensoraufnahme vorhanden sein muss, d.h. dass abseits der Sensoraufnahme auch magnetisierbare Werkstoffe an dem Kuppelkörper vorhanden sein können.

An dieser Stelle sei bemerkt, dass der Kuppelkörperträger abnehmbar, insbesondere steckbar, oder fest am Kraftfahrzeug montiert sein kann oder auch an einem Lager dergestalt, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Kraftfahrzeug vor, beispielsweise nach hinten vor einen Stoßfänger, so dass der Anhänger angehängt werden kann.

Eine andere, an sich eine eigenständige Erfindung darstellende Ausführungsform sieht folgendes vor: eine Anhängekupplung für ein Kraftfahrzeug, insbesondere ein Personen-Kraftfahrzeug, zum Anhängen eines Anhängers an das Kraftfahrzeug, mit einem an dem Kraftfahrzeug befestigbaren Kuppelkörperträger und einem an einem freien Endbereich des Kuppelkörperträgers angeordneten, außenseitig zumindest abschnittsweise kugelförmigen Kuppelkörper, auf den eine Zugkupplungsaufnahme einer Zugkupplung des Anhängers aufsetzbar ist, wobei der Kuppelkörper für die Zugkupplungsaufnahme einen diese drehbar lagernden Lagerkörper zum insbesondere mehrachsig drehgelenkigen Schwenken relativ zu dem Kuppelkörperträger bildet, wobei an dem Kuppelkörper ein ringförmiger Mitnehmerkörper drehbar gelagert ist, der von der Zugkupplungsaufnahme mitnehmbar und relativ zu dem Kuppelkörper verdrehbar ist, wobei der Mitnehmerkörper einen Bestandteil einer Sensoranordnung zur Erfassung einer Winkelstellung der Zugkupplung relativ zu dem Kuppelkörperträger bildet, wobei der Kuppelkörper zwischen seiner von dem Kuppelkörperträger abgewandten Oberseite und dem Kuppelkörperträger einen Äquatorialbereich mit einem maximalen Außenumfang aufweist, dadurch gekennzeichnet, dass der Mitnehmerkörper oberhalb oder unterhalb des Äquatorialbereichs des Kuppelkörpers angeordnet ist, so dass der maximale Außenumfang des Kuppelkörpers in dem Äquatorialbereich zum Halten der Zugkupplungsaufnahme bereit steht.

Ein Grundgedanke dieser Ausführungsform ist es, dass die Anhängekupplung im Bereich ihres größten Umfanges, bei einer Normkugelkupplung beispielsweise 50 mm, nicht durch den Mitnehmerkörper geschwächt ist. Somit kann ein so genannter Abhebetest, bei dem die zu Kugelkupplung von dem Kuppelkörper mit einer vorbestimmten Kraft abgezogen wird, was beispielsweise beim Fahrbetrieb des Gespanns aus Zugfahrzeug und Anhänger beim überfahren von Bodenwellen auftreten kann. In der Norm ECE-R 55 ist diese Kraft beispielsweise unter Absatz 3.2.3 definiert. Gerade dort ist also der Kuppelkörper, insbesondere die Kupplungskugel, nicht geschwächt, so dass die Zugkupplungsaufnahme im Bereich des maximalen Umfangs des Kuppelkörpers an diesem eingreifen kann. Dennoch ist es möglich, dass der Mitnehmerkörper von der Zugkupplung mitgenommen wird, so dass die Drehwinkelauffassung möglich ist.

Selbstverständlich sind sämtliche oben beschriebenen Ausführungsformen, insbesondere Ausgestaltungen des Mitnehmerkörpers, Gestaltung der Sensoraufnahme, mehrteiliger oder einteiliger Kupplungskörper oder dergleichen auch bei dieser Ausführungsform möglich. Dementsprechend können sämtliche vom Anspruch 1 abhängigen Ansprüche auch von dem auf die obige Anordnung des Mitnehmerkörpers außerhalb des Äquatorialbereichs gerichteten Anspruchs rückbezogen sein.

Ein normgerechtes Verhalten bzw. eine normgerechte Belastbarkeit der Anhängekupplung ist bereits dann erzielt, wenn eine horizontale Ausrichtung von Anhängekupplung und Anhänger gegeben ist, d.h. dass der Mitnehmerkörper oberhalb oder unterhalb der Äquatorialebene des Kuppelkörpers angeordnet ist. Die Äquatoriallinie ist dabei diejenige Ebene, die bei horizontal stehenden Fahrzeug oder Kuppelkörper horizontal verläuft.

Bevorzugt ist es jedoch, dass auch bei einer Schrägstellung des Anhängers relativ zum Zugfahrzeug noch ein maximaler Umfang des Kuppelkörpers zur Verfügung steht, an dem die Kupplung des Anhängers angreifen kann es ist bevorzugt, dass der Äquatorialbereich, außerhalb dessen der Mitnehmerkörper angeordnet ist, derart breit ist (man könnte auch sagen hoch ist), dass beispielsweise bei einer Schrägstellung der Zugkupplung zum Kuppelkörper bzw. auch zum Zugfahrzeug (je nachdem, was man betrachtet) um 10-15°, vorzugsweise 15-20° oder auch 10-25° Grad die Zugkupplungsaufnahme immer noch im Bereich eines maximalen Außenumfangs des Kuppelkörpers an demselben angreift.

Besonders bevorzugt ist es, wenn der Mitnehmerkörper oberhalb einer Ebene oder im Bereich einer Ebene angeordnet ist, die etwa mittig zwischen der Oberseite des Kuppelkörpers und der Äquatorialebene verläuft.

Bevorzugt ist es auch, wenn eine Oberseite des Kuppelkörpers massiv ist, jedenfalls nicht durch den Mitnehmerkörper geschwächt ist, so dass der Kuppelkörper einen seiner Oberseite eine obere Stützfläche aufweist.

Eine an sich eigenständige Erfindung stellt die folgende Anhängekupplung dar, bei der der Kuppelkörper als ein Kupplungselement bezeichnet ist. Die obigen Maßnahmen sind bei dieser Anhängekupplung einzeln oder in beliebigen Kombinationen selbstverständlich auch realisierbar:

Diese Erfindung oder diese vorteilhafte Ausgestaltung betrifft eine Anhängekupplung für ein Zugfahrzeug, mit einem Kupplungsarm, an dessen freiem Ende ein Kupplungselement, insbesondere eine Kupplungskugel, zum Anhängen eines Anhängers angeordnet ist, wobei das Kupplungselement außenseitig mindestens eine Stützfläche für eine Kupplung des Anhängers aufweist, wobei die Anhängekupplung einen Aufnahmeraum für mindestens einen Sensor, insbesondere einen Drehwinkelsensor, aufweist. Bei der Anhängekupplung ist vorgesehen, dass der Aufnahmeraum unmittelbar in dem Kupplungselement vorgesehen ist.

Diese Anhängekupplung kann einen insbesondere ringförmigen, am Kupplungselement, also dem Kuppelkörper, drehbar gelagerten Mitnehmerkörper aufweisen.

Ein Grundgedanke ist es dabei, den Sensor möglichst direkt im Kupplungselement, beispielsweise einer Kupplungskugel, aber auch einem sonstigen Formstück, das zur Aufnahme bzw. zum Halten des Anhängers geeignet ist, angeordnet ist. Die Sensorik befindet sich dementsprechend vor Ort, d.h. unmittelbar im Messbereich. Beispielsweise können auf diesem Weg optimal Drehwinkel, Lastzustände und dergleichen andere Zustände erfasst werden. Der Sensor ist also beispielsweise ein Drehwinkelsensor, kann aber auch ein Stützlastsensor, ein Sensor, der zur Erfassung dient, ob ein Anhängeelement des Anhängers angekuppelt ist, ein Beschleunigungssensor oder dergleichen sein.

Eine bevorzugte Ausführungsform sieht vor, dass das Kupplungselement bzw. der Kuppelkörper mindestens eine Durchtrittsöffnung, beispielsweise einen Schlitz oder eine Nut, aufweist, die sich von der mindestens einen Stützfläche, d.h. von der Außenseite des Kupplungselements, in den Innenraum, erstreckt, also zum Aufnahmeraum hin. Es versteht sich, dass die Durchtrittsöffnung auch eine Bohrung sein kann.

Die Durchtrittsöffnung verläuft beispielsweise entlang einer Äquatoriallinie des Kupplungselements, insbesondere wenn dies kugelig ist. Es versteht sich, dass die Durchtrittsöffnung auch oberhalb oder unterhalb des Äquators sein kann, je nach gewünschter Position. In der Durchtrittsöffnung ist beispielsweise ein von der Kupplung des Anhängers betätigbarer Mitnehmer oder Mitnehmerkörper angeordnet, beispielsweise ein Drücker, ein Drehmitnehmer, ein Taststößel, ein Ring oder dergleichen.

Das Kupplungselement bzw. der Kuppelkörper ist vorzugsweise mehrteilig, was z.B. die Fertigung vereinfachen und/oder die Anordnung des mindestens einen Sensors in dem Aufnahmeraum erleichtern kann. Eine Ausführungsform sieht dabei vor, dass das Kupplungselement ein erstes und mindestens ein zweites Kupplungselementteil umfasst, wobei eines oder beide der Kupplungselementteile einen Teil des Aufnahmeraums oder den Aufnahmeraum als Ganzes umfassen. Somit ist es also beispielsweise möglich, dass der jeweilige Teil des Aufnahmeraums des einen Kupplungselementteils zum anderen Kupplungselementteil hin offen ist, was eine einfache Montage des Sensors in dem Aufnahmeraum ermöglicht. Vorzugsweise ist dabei vorgesehen, dass der Aufnahmeraum durch das andere Kupplungselementteil verschlossen wird, so dass dieses quasi einen Deckel für den Aufnahmeraum bildet. Es versteht sich, dass auch andere Verschlussmaßnahmen, Deckel, Stopfen oder dergleichen, vorgesehen sein können, um den Aufnahmeraum zu verschließen.

Vorzugsweise können auch Dichtungen vorgesehen sein, die Umwelteinflüsse vom dem Aufnahmeraum fernhalten.

Zum Kupplungsarm sei noch nachgetragen, dass dieser zwar selbstverständlich in einer bevorzugten Ausführungsform eine armartige Gestalt hat. Es ist aber auch möglich, dass unter dem Begriff "Kupplungsarm" ganz allgemein ein Kuppelkörperträger verstanden wird, der eine durchaus massive Bauart aufweisen kann. Mithin ist also der Kupplungsarm nicht auf eine Ausführungsform als Stange oder dergleichen reduziert, sondern kann durchaus massive Gestalt haben.

Das erste Kupplungselementteil und/oder das zweite Kupplungselementteil des Kupplungselements oder des Kuppelkörpers weisen zweckmäßigerweise einen Teil der sich zum Aufnahmeraum erstreckenden Durchtrittsöffnung auf, beispielsweise den vorgenannten Schlitz oder die Nut.

Wie bereits erwähnt, handelt es sich bei dem Kupplungselement oder dem Kuppelkörper zweckmäßigerweise um eine Kugel. Insbesondere dann ist vorgesehen, dass das erste und/oder das mindestens eine zweite Kupplungselementteil außenseitig zumindest teilweise kugelig sind. Die Kugelgestalt ermöglicht es, dass in an sich bekannter Weise die Kupplung des Anhängers auf dem Kupplungselement in der Art eines Kugelgelenks oder einer Kugelgelenkpfanne gleiten kann.

Bevorzugt ist vorgesehen, dass das erste Kupplungselementteil fest mit dem Kupplungsarm verbunden ist. Das andere, mindestens eine zweite Kupplungselementteil ist vorteilhaft sozusagen auf das erste Kupplungselementteil aufgesetzt. Bevorzugt ist vorgesehen, dass das erste Kupplungselementteil einstückig mit dem Kupplungsarm ist. Dies ist beispielsweise durch eine Herstellung in einem Gussverfahren, durch Schmieden oder dergleichen ohne Weiteres möglich. Das zweite Kupplungselementteil kann beispielsweise eine Art Kappe sein, das das erste Kupplungselementteil oberseitig abdeckt.

Bevorzugt ist eine Verbindung der beiden Kupplungselementteile mittels eines oder mehrerer Verbindungsvorsprünge, die in korrespondierende Aufnahmen am anderen Kupplungselementteil eingreifen. Dabei sieht eine vorteilhafte Ausführungsform vorzugsweise vor, dass der Verbindungsvorsprung in der Art eines Zapfens ausgestaltet ist. Besonders bevorzugt ist eine zentrale Anordnung mindestens eines Verbindungsvorsprunges oder des einzigen Verbindungsvorsprunges.

Insbesondere bei dieser Ausführungsform ist es möglich, dass sich der Aufnahmeraum um den Verbindungsvorsprung ringförmig erstreckt. Aber auch eine außerzentrische Anordnung des Verbindungsvorsprunges (bezogen auf das Kupplungselement) ist ohne Weiteres möglich.

Die Anhängekupplung weist zweckmäßigerweise einen sich von dem Aufnahmeraum zu dem Kupplungsarm hin erstreckenden Kanal zur Aufnahme einer Leitung, z.B. einer elektrischen Leitung. Bevorzugt durchsetzt der Kanal auch zumindest einen Teil des Kupplungsarmes. Somit ist auf einfachem Wege eine geschützte Verbindung zwischen einerseits dem Aufnahmeraum, wo der Sensor sitzt, und andererseits beispielsweise einer Auswerteelektronik, die sich zentral und geschützt am Zugfahrzeug oder in einem Innenraum des Zugfahrzeugs befindet, möglich.

Es ist allerdings festzuhalten, dass es der erfindungsgemäß angeordnete Aufnahmeraum ermöglicht, dass auch direkt am Sensor eine Auswertung oder Vorauswertung der Sensorsignale möglich ist. Auch eine Signalverstärkung ist möglich. Dementsprechend sind also beispielweise beim Sensor direkt, d.h. im Aufnahmeraum, Auswertemittel, Signalverstärkungsmittel und dergleichen andere elektrisch vorteilhafte und messtechnisch günstige Maßnahmen getroffen.

Der Aufnahmeraum nimmt also, wie bereits erwähnt, zweckmäßigerweise einen Sensor auf. Mithin bildet also der Sensor in einer bevorzugten Ausführungsform der Erfindung einen Bestandteil der Anhängekupplung. Es ist aber auch denkbar, dass der Sensor sozusagen als Nachrüstlösung nachträglich in den Aufnahmeraum eingebracht werden kann. Beispielsweise durch die vorgenannte (n) Durchtrittsöffnung(en).

Der Aufnahmeraum bietet zweckmäßigerweise auch Platz zur Anordnung eines Erregers oder Encoders für den Sensor.

Nachfolgend wird ein Ausführungsbeispiel der Erfindung anhand der Zeichnung erläutert. Es zeigen:
- Figur 1: eine Querschnittsansicht einer Anhängekupplung gemäß der Erfindung, an die eine Zugkupplung angekuppelt ist,
- Figur 2: eine perspektivische Schrägansicht der Anhängekupplung von hinten oben,
- Figur 3: eine Querschnittsansicht der Anhängekupplung gemäß Figur 2, etwa entlang einer Schnittlinie A-A, die in die in
- Figur 4: von oben dargestellte Anhängekupplung eingezeichnet ist,
- Figur 5: eine Seitenansicht der Anhängekupplung gemäß der vorstehenden Figuren,
- Figur 6: einen Teilschnitt eines Kuppelkörpers der Anhängekupplung gemäß Figur 5 sowie eines Mitnehmerkörpers, etwa entlang einer Schnittlinie B-B in Figur 5,
- Figur 7: den Mitnehmerkörper gemäß Figur 6 in unkomprimierter und komprimierter Stellung,
- Figur 8: eine perspektivische Schrägansicht des Mitnehmerkörpers gemäß Figuren 6, 7,
- Figur 9: eine weitere erfindungsgemäße Anhängekupplung, bei der ein Mitnehmerkörper oberhalb einer Äquatoriallinie des Kuppelkörpers angeordnet ist, in perspektivische Ansicht,
- Figur 10: die Anhängekupplung gemäß Figur 9 von vorn,
- Figur 11: einen Schnitt entlang einer Linie A-A in Figur 10,
- Figur 12: ein Detail B aus Figur 11,
- Figur 13: eine Variante der Anhängekupplung gemäß Figur 9,
- Figur 14: eine perspektivische Darstellung eines Ringsegments eines Mitnehmerkörpers für die Anhängekupplung gemäß Figur 1 oder Figur 9 mit einer in Umfangsrichtung wirksamen Hakenanordnung,
- Figur 15: eine Variante des Mitnehmerkörpers gemäß Figur 13, allerdings mit einer stirnseitig wirksamen Hakenanordnung,
- Figur 16: eine Variante des Mitnehmerkörpers gemäß Figur 13 mit einer Spreiz-Hakenanordnung,
- Figur 17: eine weitere Variante eines erfindungsgemäßen Mitnehmerkörpers, ebenfalls mit Rasthaken,
- Figur 18: eine Variante des Mitnehmerkörpers gemäß Figur 13, wobei 2 gleichartige Ringsegmente zur Bildung des gesamten Mitnehmerkörpers geeignet sind,
- Figur 19: ein weiteres Ausführungsbeispiel eines Mitnehmerkörpers, bei dem gleichartige Ringsegmente mittels Haken miteinander verhakbar sind,
- Figur 20: eine Variante des Mitnehmerkörpers gemäß Figur 13, wobei 2 Ringsegmente mit einem Scharnier, insbesondere einem Filmscharnier miteinander verbunden sind,
- Figur 21: einen Mitnehmerkörper mit Steckaufnahmen zum Einstecken und Verrasten von Gebern,
- Figur 22: eine Variante des Mitnehmerkörpers gemäß Figur 20, ebenfalls mit Steckaufnahmen,
- Figur 23: eine schematische Draufsicht eines Mitnehmerkörpers, bei dem ein zahnriemenartigen Mitnehmer mit einem Träger des Mitnehmerkörpers verschraubt ist,

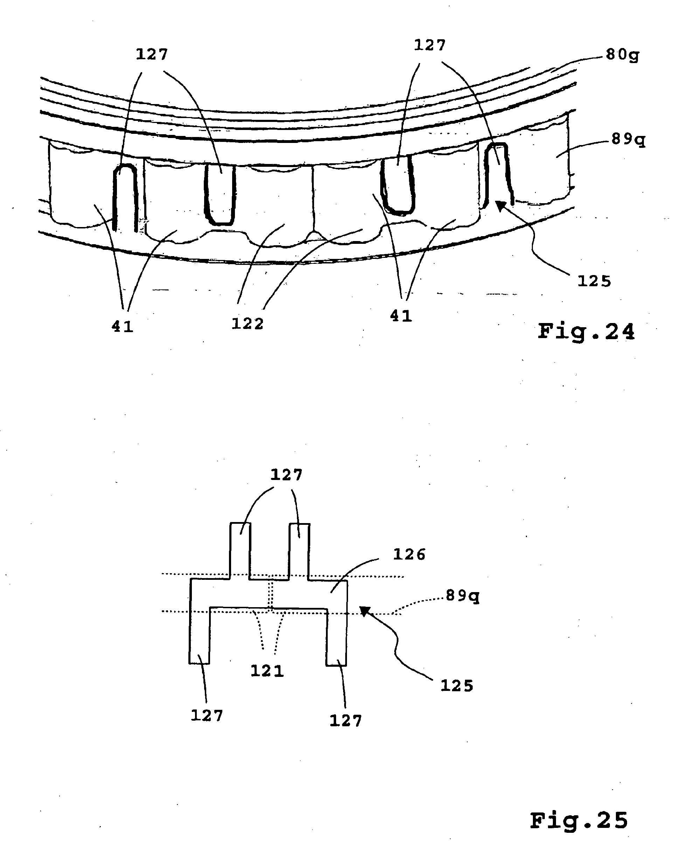

- Figur 24: einen Mitnehmerkörper mit einem zahnriemenartigen Mitnehmer, dessen Längsenden mit einem in
- Figur 25: in Draufsicht dargestellten Schließglied miteinander verbunden sind,
- Figur 26: eine Seitenansicht einer weiteren Anhängekupplung und
- Figur 27: einen Querschnitt der Anhängekupplung gemäß Figur 26 entlang einer Schnittlinie A-A.

Eine Anhängekupplung 10 ist an einem Kraftfahrzeug 12 befestigt, beispielsweise einem Querträger. An einem Kuppelkörperträger 13 der Anhängekupplung 10 sind hierfür beispielsweise Bohrungen 14 vorgesehen, wobei eine bewegliche Lagerung, insbesondere eine Dreh- und/oder Schiebelagerung, des Kuppelkörperträgers 13 bezüglich des Kraftfahrzeugs 12 auch möglich ist, z.B. anhand einer geeigneten Lagereinrichtung. Der Kuppelkörperträger 13 steht nach hinten vor einen Stoßfänger 11 des Kraftfahrzeuges 12 vor. Der Kuppelkörperträger 13 trägt an seinem freien Ende einen Kuppelkörper 15, der vorliegend eine kugelige Gestalt hat. Dementsprechend kann eine Zugkupplung 16 eines Anhängers 17 mit ihrer Zugkupplungsaufnahme 18 auf den kugeligen Kuppelkörper 15 aufgesetzt werden.

Die Zugkupplung 16 ist an einem freien Ende einer Deichsel 19 des Anhängers 17 angeordnet und mittels eines Schwenkhebels 20 betätigbar. Wenn der an um eine Schwenkachse 24 schwenkbar gelagerte Schwenkhebel 20 in die Schließstellung, das heißt in Richtung der Deichsel 19 bewegt wird, betätigt er in an sich bekannter Weise einen Haltebacken 21 in Richtung einer Kugeloberfläche 23 des Kuppelkörpers 15. Somit liegt also eine Innenfläche 22 der Zugkupplungsaufnahme 18 an der Kugeloberfläche 23 an. Der Kuppelkörper 15 ist zweckmäßigerweise feststehend bezüglich des Kuppelkörperträgers 13, zumindest drehfest, so dass die Zugkupplungsaufnahme 18 an der Kugeloberfläche 23 in bekannter Weise außenseitig entlang gleitet.

Die vorliegende Ausgestaltung des Kuppelkörpers 15 als Kupplungskugel, die bevorzugt ist, ermöglicht die Ankupplung einer üblichen, normgerechten Zugkugelkupplung an die erfindungsgemäße Anhängekupplung 10, vorliegend also der Zugkupplung 16. Diese ist dementsprechend eine Zugkugelkupplung.

Der Kuppelkörper 15 hat an seiner Oberseite eine Abflachung 25. Der Kuppelkörperträger 13 weist einen Halsabschnitt 26 auf, auf dem der Kuppelkörper 15 angeordnet ist. Der Halsabschnitt 26 befindet sich an einem freien Endbereich eines Armabschnitts 27 des Kuppelkörperträgers 13.

Der Armabschnitt 27, der Halsabschnitt 26 und der Kuppelkörper 15 sind zweckmäßigerweise einstückig, so dass insgesamt die Anhängekupplung 10 eine hohe Belastbarkeit aufweist. Es können typische Werkstoffe für Kugelstangen verwendet werden, wobei selbstverständlich auch höherwertige Materialien, z.B. C45, 42CrMo4 oder dergleichen, zwar möglich sind, jedoch nicht unbedingt notwendig. Ferner besteht die Möglichkeit, den Kuppelkörper 15 und den Kuppelkörperträger 13 auch mehrteilig auszuführen, beispielsweise als zwei voneinander an sich zunächst separate, jedoch fest miteinander verbundene Komponenten. Die jeweiligen Bestandteile der Anhängekupplung 10 können beispielsweise miteinander verschweißt, verklebt oder verschraubt sein, wobei die vorliegende einstückige Bauweise bevorzugt ist. Diese einstückige oder fest miteinander zusammengefügte Bauweise der Komponenten der Anhängekupplung 10 bzw. deren Kupplungsarm ist ohne Weiteres realisierbar, auch wenn die nachfolgend beschriebene Sensoranordnung 30 zum Einsatz kommt, mit der Winkelstellungen des Anhängers 17 relativ zur Anhängekupplung 10 und somit zum Kraftfahrzeug 12 ermittelbar sind.

Die Sensoranordnung 30 umfasst einen Sensor 31, beispielsweise einen magnetischen Sensor, der in einer Sensoraufnahme direkt am Kuppelkörper 15 angeordnet ist. Die Sensoraufnahme 32 und somit der Sensor 31 befinden sich in einem äquatorialen Bereich des Kuppelkörpers 15. Der Sensor 31 ist beispielsweise an einer Platine angeordnet, die weitere Komponenten enthalten kann, beispielsweise einen Filter zur Ausfilterung von unplausiblen Spitzenwerten, einen Verstärker zu Verstärkung eines Sensorsignals, das der Sensor 31 erzeugt, oder dergleichen. Selbstverständlich können diese Funktionen auch unmittelbar in den Sensor 31 integriert sein, insbesondere dann, wenn dieser als ein ASIC, ausgebildet ist.

Jedenfalls befindet sich der Sensor 31 vor Ort dort, wo die Winkelmessung tatsächlich stattfinden soll.

Am Kuppelkörper 15, ebenfalls im Bereich der Äquatoriallinie, befindet sich weiterhin ein Mitnehmerkörper 33, der in einer Lageraufnahme 34 des Kuppelkörpers 15 drehbar gelagert ist. Der Mitnehmerkörper 33 ist ringförmig, d.h. er ist als ein Ring ausgestaltet. In dem Mitnehmerkörper 33 sind Magnete 35 aufgenommen, deren Magnetfeld den Sensor 31 erregt bzw. beaufschlagt. Ändert sich nunmehr die Winkelposition der Magnete 35 relativ zum Sensor 31, erzeugt dieser ein Winkelsignal, das die Winkelstellung des Mitnehmerkörpers 33 relativ zum Sensor 31 repräsentiert. Da der Sensor 31 bezüglich des Kuppelkörpers 15 ortsfest ist, signalisiert und identifiziert das Winkelsignal, das der Sensor 31 erzeugt, zugleich eine Winkelstellung des Mitnehmerkörpers 33 relativ zum Kuppelkörper 15.

Die Magnete 35 sind beispielsweise nebeneinander, jedoch zweckmäßigerweise mit einem Abstand 36 zueinander im Mitnehmerkörper 33 aufgenommen. Die Magnete 35 sind beispielsweise in Umfangsrichtung des Mitnehmerkörpers 33 nebeneinander angeordnet.

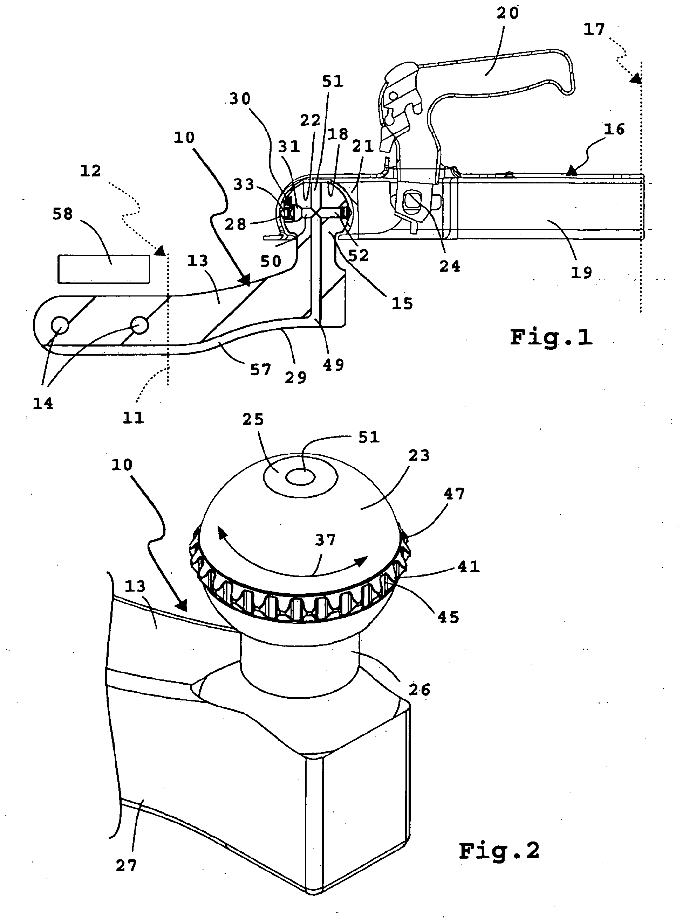

Durch einen Pfeil 37 wird die Drehbarkeit des Mitnehmerkörpers 33 relativ zum Kuppelkörper 15 in Figur 2 angedeutet.

Der Mitnehmerkörper 33 besteht beispielsweise aus Kunststoffmaterial, das eine gewisse Kompressibilität oder Elastizität aufweist, insbesondere aus Polyurethan. Vernetztes Polyurethan ist vorteilhaft. Zudem schützt der flexible Mitnehmerkörper 33 die in ihm aufgenommenen Magnete 35. Beispielsweise sind Aufnahmetaschen 38 für die Magnete 35 vorhanden. Es ist aber auch möglich, dass die Magnete 35 direkt bei der Herstellung des Mitnehmerkörpers 33 mit dem Kunststoffmaterial umspritzt sind.

Weiterhin ist es möglich, einen an sich relativ harten, insbesondere magnetischen Mitnehmerkörper vorzusehen, wobei dieser in der Regel zweiteilig oder mehrteilig sein wird, so dass man dessen einzelnen Komponenten an dem Kuppelkörper 15 montieren kann. Wenn der Mitnehmerkörper 33 relativ starr ist, ist es zweckmäßig, ihn zumindest an seinem Außenumfang mit einer elastischen Beschichtung zu versehen, was nachfolgend noch deutlich wird:

Der Mitnehmerkörper 33 wird nämlich von der Zugkupplung 16 mitgenommen, wenn diese an der Anhängekupplung 10 montiert ist, d.h. der Kuppelkörper 15 im Innenraum der Zugkupplungsaufnahme 18 angeordnet ist. Der Mitnahmeeffekt wird noch verbessert, indem der Haltebacken 21 Druck auf den Mitnehmerkörper 33 ausübt, so dass dieser formschlüssig in der Zugkupplungsaufnahme 18 anliegt, jedoch bezüglich des Kuppelkörpers 15 drehbar ist (Pfeil 37). Wenn also nunmehr der Anhänger 17 seine Drehposition oder Drehwinkelstellung relativ zum Kraftfahrzeug 12 bzw. zur Anhängekupplung 10 verändert, nimmt er den Mitnehmerkörper 33 mit. Dadurch ändert eine Relativposition eines Magnetfeldes, das die Magnete 35 erzeugen, relativ zum Sensor 31. Der Sensor 31 kann somit die Winkelstellung des Mitnehmerkörpers 33 relativ zum Kuppelkörper 15, entsprechend also auch die Winkelstellung des Anhängers 17 relativ zum Kraftfahrzeug 12, ermitteln.

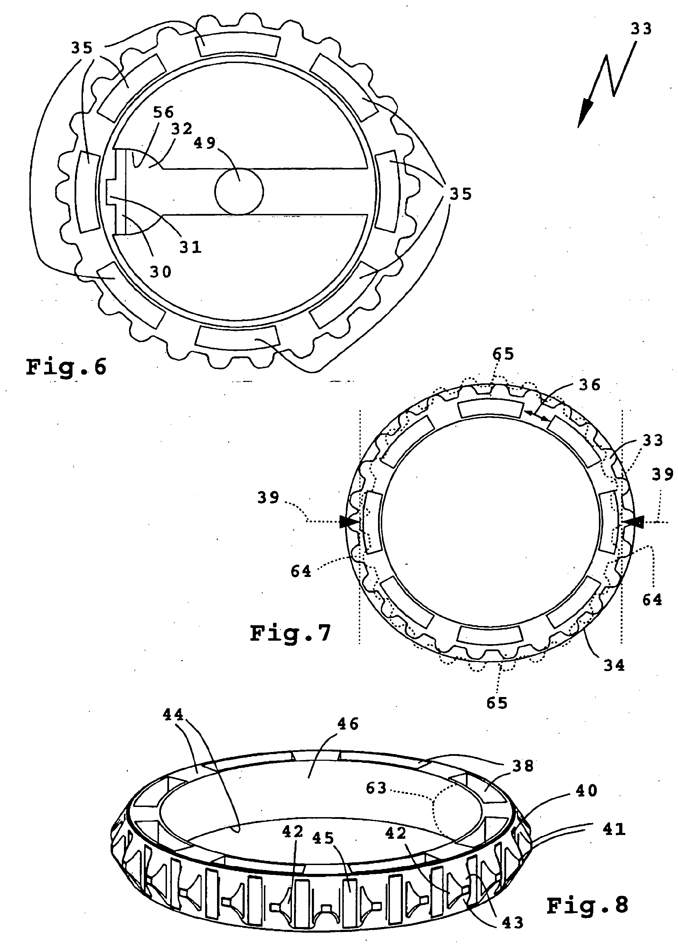

Die Drehmitnahme des Mitnehmerkörpers 33 durch die Zugkupplung 16 wird noch dadurch verbessert, dass dieser durch die Zugkupplung 16, insbesondere deren Haltebacken 21 komprimierbar ist. Dies ist durch Pfeile 39 in Figur 7 angedeutet. Wenn der Mitnehmerkörper 33 ohne Kraftbeaufschlagung ist, hat er beispielsweise eine im Wesentlichen kreisrunde Gestalt, zumindest an seinem Innenumfang, der in Kontakt mit dem Kuppelkörper 15 tritt. Bei Beaufschlagung durch die Zugkupplung 16, insbesondere deren Haltebacken 21 und eine diesem gegenüberliegende Wand 28 der Zugkupplungsaufnahme 18, wird er etwas verformt, so dass er eine ovale oder elliptische Gestalt annimmt, die in gestrichelten Linien in Figur 7 eingezeichnet ist.

Mindestens ein Abschnitt 64 des Mitnehmerkörpers 33, der durch z.B. die den Haltebacken 21 druckbeaufschlagt ist, ist z.B. in der Lageraufnahme 34 des Kuppelkörpers 15 vollständig aufgenommen, so dass allenfalls Mitnahmevorsprünge 41 vor die Lageraufnahme 34 vorstehen. Durch die Beaufschlagung des Mitnehmerkörpers 33 im Bereich des mindestens einen Abschnitts 64 wird mindestens ein Abschnitt 65 des Mitnehmerkörpers 33 nach radial außen, d.h. aus der Lageraufnahme 34 des Kuppelkörpers 15 heraus gedrückt, so dass er noch weiter vor diese nach außen vorsteht als im unbelasteten Zustand.

An einem radialen Außenumfang 40 des Mitnehmerkörpers 33 befinden sich Mitnahmevorsprünge 41. Die Mitnahmevorsprünge 41 sind pyramidenförmig ausgestaltet. Jedenfalls ist es bei erfindungsgemäß vorgesehenen Mitnahmevorsprüngen vorteilhaft, wenn sie mindestens eine Schrägfläche aufweisen. Beispielsweise sind Schrägflächen 42 in Umfangsrichtung vorgesehen. Weiterhin sind Schrägflächen 43 vorgesehen, die schräg in Richtung der Stirnseiten 44 des Mitnehmerkörpers 33 verlaufen. Die Zugkupplungsaufnahme 18 liegt an den Mitnahmevorsprüngen 41 an, die zweckmäßigerweise zumindest in gewissem Maße komprimierbar bzw. elastisch verformbar sind, so dass sie flächig an der Zugkupplungsaufnahme 18 bzw. deren Innenfläche 22 anliegen. Dadurch wird der Halt bzw. die Drehmitnahme verbessert.

Weiterhin sind Schlitze 45 am Außenumfang 40 vorteilhaft. Durch die Schlitze 45 und/oder die Abstände zwischen den Mitnahmevorsprüngen 41 ist es möglich, dass Schmutz, beispielsweise Sand oder sonstige Partikel, in die Zwischenräume zwischen den Mitnahmevorsprüngen 41 und/oder die Schlitze 45 gelangen können, ohne dass durch die Druckbeanspruchung, die beim Schließen der Zugkupplung 16 auf den Mitnehmerkörper 33 ausgeübt wird, eine zu hohe Druckbeanspruchung der Magnete 35 auftritt. Diese sind somit optimal geschützt.

Der Mitnehmerkörper 33 gleitet mit seinem Innenumfang 46 sowie mit seinen Stirnseiten 44 in einer Führungsnut 47 am Kuppelkörper 15. Die Führungsnut 47 ist beispielsweise eine Ringnut. Die Anordnung ist vorteilhaft so getroffen, dass die Stirnseiten 44 ganz oder zumindest im Wesentlichen in der Führungsnut 47 aufgenommen sind, d.h. dass im Wesentlichen nur die Mitnahmevorsprünge 41 vor die Kugeloberfläche 23 des Kuppelkörpers 15 vorstehen. Weiterhin sind die Schrägflächen 43, die vorliegend einen im Wesentlichen geradlinigen Verlauf haben können, aber auch beispielsweise eine ballige Kontur ausprägen könnten, vorteilhaft insofern, als beispielsweise Bremspads oder sonstige Hindernisse, die bei der Zugkupplung 16 vorhanden sein können, über den Mitnehmerkörper 33 hinweg gleiten können, ohne diesen zu beschädigen.

Allerdings ist festzuhalten, dass der Mitnehmerkörper 33 leicht austauschbar ist. Wenn er nämlich verschlissen ist, kann er beispielsweise aus der Führungsnut 47 leicht entfernt und durch einen neuen, unverschlissenen Mitnehmerkörper 33 ersetzt werden. Bevorzugt ist der Mitnehmerkörper 33 nämlich insoweit dehnbar, dass er über den Kuppelkörper 15 hinweg gestreift werden kann, beispielsweise von der oberen Abflachung 25 her, bis er schließlich selbständig in die Führungsnut 47 "hineinschnappt".

Weiterhin ist die Führungsnut 47 derartig tief, dass es möglich ist, den Mitnehmer 33 elastisch im Sinne der Verformung, die in Figur 7 angedeutet ist, zu verformen. Mithin ist es also möglich, dass die Führungsnut 47 den Mitnehmerkörper 33 im Wesentlichen an seinen Stirnseiten 44 führt. Der Innenumfang 46 des Mitnehmerkörpers 33 hingegen tritt nicht oder nur abschnittsweise mit dem Nutboden der Führungsnut 47 in Kontakt. Dies ist jedoch optional, d.h. nicht zwingend notwendig. Es ist nämlich auch möglich, dass der Innenumfang 46 im Wesentlichen flächig am Nutboden der Führungsnut 47 anliegt.

Weiterhin ist es zwar zweckmäßig, wenn eine Führungsnut im Wesentlichen zueinander winkelige Innenseiten aufweist, insbesondere U-förmige Innenseiten. Es ist aber bei einer erfindungsgemäßen Anhängekupplung auch möglich, dass ein Mitnehmerkörper beispielsweise im Querschnitt U-förmige oder V-förmige Innenkontur oder Führungskontur aufweist, wobei dann die am Kuppelkörper vorhandene Lageraufnahme oder Führungsnut eine korrespondierende Innenkontur aufweist, d.h. ebenfalls eine V-förmige oder U-förmige Kontur. Weiterhin ist es möglich, dass die Führungsnut 47 ausgerundet ist und der in die Führungsnut 47 oder Lageraufnahme 34 eingreifende Lagervorsprung oder die Lagerfläche am Mitnehmerkörper 33 dann beispielsweise ebenfalls eine (außenseitig) gerundete Kontur aufweist, angedeutet durch eine schematisch in Figur 8 eingezeichnete Führungskontur 63.

Nicht nur die Montage des Mitnehmerkörpers 33, sondern auch die Montage der Sensoranordnung 30 selbst gelingt äußerst einfach:

Die Sensoraufnahme 32 kommuniziert mit einem Anschlusskanal 48. Der Anschlusskanal 48 hat zueinander winkelige erste und zweite Anschlusskanalabschnitte 49, 50. Der erste Anschlusskanalabschnitt 49 führt von einer Unterseite 29 des Kuppelkörperträgers 13 bis in einen mittleren, zentralen Bereich des Kuppelkörpers 15. Dort ist er mit dem zweiten Anschlusskanalabschnitt 50 verbunden, der seinerseits bis zur Sensoraufnahme 32 führt.

Der erste Anschlusskanalabschnitt 49 ist mit einem ersten Montagekanal 51 verbunden. Der zweite Anschlusskanalabschnitt 50 ist mit einem zweiten Montagekanal 52 verbunden. Der erste Montagekanal 51 und der erste Anschlusskanalabschnitt 49 bilden insgesamt einen ersten Durchgangskanal 53. Ein zweiter Durchgangskanal 54 wird vom Anschlusskanalabschnitt 50 und vom zweiten Montagekanal 52 gebildet.

Die Durchgangskanäle 53, 54 weisen insgesamt einen durchgängigen, gleichförmigen Querschnitt auf.

Der erste Montagekanal 51 bzw. der erste Durchgangskanal 53 erstrecken sich von der Oberseite des Kuppelkörpers 15, d.h. von der Abflachung 25, durch den Kuppelkörper 15, den Halsabschnitt 26 und den vorderen, freien Endbereich des Armabschnitts 27 hindurch bis zur Unterseite 29. Der erste Durchgangskanal 53 verläuft also in einer insbesondere zentralen Vertikalebene der Anhängekupplung 10 bzw. des Kuppelkörpers 15.

Der zweite Durchgangskanal 54 verläuft dazu rechtwinkelig, aber ebenfalls zentral, jedoch ausschließlich im Kuppelkörper 15. Der zweite Durchgangskanal 54 verläuft in einer Äquatorialebene des Kuppelkörpers 15.

Die Durchgangskanäle 53, 54 können zweckmäßigerweise durch sich kreuzende Bohrungen gebildet sein. Es ist also möglich, die Anhängekupplung 10 insgesamt herzustellen, d.h. eine Baueinheit aus Kuppelkörperträger 13 und Kuppelkörper 15 zu bilden, beispielsweise durch Schmieden, Gießen oder dergleichen, um diese anschließend durch zwei sich kreuzende Bohrungen zu durchsetzen, wobei dadurch dann der erste und zweite Durchgangskanal 53, 54 gebildet sind. Der Kupplungsarm wird also nicht oder nur unwesentlich geschwächt.

Dennoch gelingt die Montage der Sensoranordnung 30 sowie einer zum Sensor 31 führenden Verbindungsleitung sehr einfach. Der Sensor 31 kann beispielsweise von vorn, d.h. von der Lageraufnahme 34 her, in die Sensoraufnahme 32 eingesetzt werden. Die Verbindungsleitung 55 wird sodann durch die Anschlusskanalabschnitte 49, 50 hindurch bis zur Unterseite 29 geführt. Dabei ist es hilfreich, dass man mit einem Montagewerkzeug, beispielsweise durch den ersten oder zweiten Montagekanal 51, 52 (angedeutet durch Pfeile 60, 61) hindurchgreifen kann, um die Verbindungsleitung 55 sozusagen in den ersten und zweiten Anschlusskanalabschnitt 49, 50 einzubringen.

Die Sensoraufnahme 32 ist zur Außenseite des Kuppelkörpers 15 hin, vorliegend also zur Führungsnut 47 hin, etwas aufgeweitet. Beispielsweise hat sie einen trompetenförmigen, langgestreckten Innenraum, so dass zwischen dem Sensor 31 und einer Innenwand 56 der Sensoraufnahme 32 ein Abstand vorhanden ist.

Es versteht sich, dass die Sensoraufnahme 32, ebenso wie die Mündungen der Montagekanäle 51, 52 ohne Weiteres verschließbar sind, beispielsweise durch Ausgießen, Einstecken eines Deckels oder dergleichen, um ein Eindringen von Schmutz zu verhindern.

Ferner ist es möglich, den Sensor 31 in der Sensoraufnahme 32 zu vergießen, um ihn zu schützen und mechanisch ortsfest festzulegen.

Die Verbindungsleitung 55 ist beispielsweise durch einen Kanal 57, der offen oder geschlossen sein kann, an der Unterseite 29 des Kuppelkörperträgers 13 entlanggeführt, um eine zweckmäßigerweise ortsfest am Kraftfahrzeug 12 angeordnete, vorteilhaft einen Bestandteil der Anhängekupplung 10 bildenden Auswerteeinrichtung 58 zu verbinden.

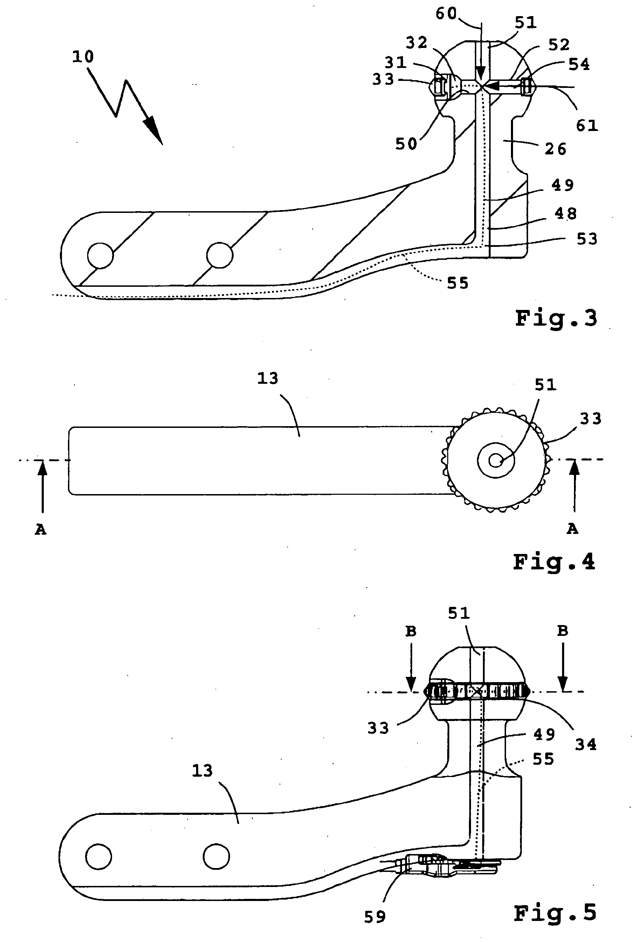

Es versteht sich, dass eine Auswerteeinrichtung auch direkt an der Kugelstange angeordnet sein kann. Exemplarisch ist ein Modul 59 in Figur 5 eingezeichnet, das an der Unterseite 29 montierbar oder montiert ist.

Die Auswerteeinrichtung 58 und/oder das Modul 59 sind vorzugsweise dazu ausgestaltet, vom Sensor 31 erzeugte Signale auszuwerten und insbesondere in relative Winkelsignale umzuwandeln, die dann von einer Fahrzeugelektrik des Kraftfahrzeuges 12 ausgewertet werden können. Die Auswerteeinrichtung 58 und/oder das Modul 59 weisen hierzu zweckmäßigerweise eine Bus-Schnittstelle, insbesondere eine CAN-Bus-Schnittstelle, eine LIN-Bus-Schnittstelle oder dergleichen, auf.

Eine in Figur neun dargestellte Anhängekupplung 10b entspricht im Wesentlichen der Anhängekupplung 10, hat jedoch einen anderen Kuppelkörper 15b sowie einen alternativ ausgestalteten Mitnehmerkörper 33b. Der Mitnehmerkörper 33b ist oberhalb einer Äquatorialebene 70 des Kuppelkörpers 15b angeordnet. Die Äquatorialebene 70 ist zugleich der Bereich des größten Außenumfangs 75 des Kuppelkörpers 15b zwischen seiner Oberseite 71 und seiner mit dem Kuppelkörperträger 13 bzw. dem Halsabschnitt 26 verbundenen Unterseite 72. An der Oberseite 71 ist eine Stützfläche 73 vorhanden, d.h. der Kuppelkörper 15b ist sowohl in seinem sich oberhalb der Äquatorialebene 70 erstreckenden Äquatorialbereich 74 als auch an seiner Oberseite 71 massiv, so dass er die Zugkupplungsaufnahme 18 jedenfalls in einem Bereich unterhalb der Äquatorialebene 70 stützen kann. Dies ist wesentlich für einen so genannten Abzugstest oder Hebetest, bei dem geprüft wird, ob die Zugkupplungsaufnahme 18 am Kuppelkörper 15b hält, wenn eine Kraft nach oben auf die Zugkupplung 16 wirkt.

Eine untere Wand einer Führungsnut 47b, in der der Mitnehmerkörper 33b aufgenommen ist, verläuft knapp oberhalb der Äquatorialebene 70.

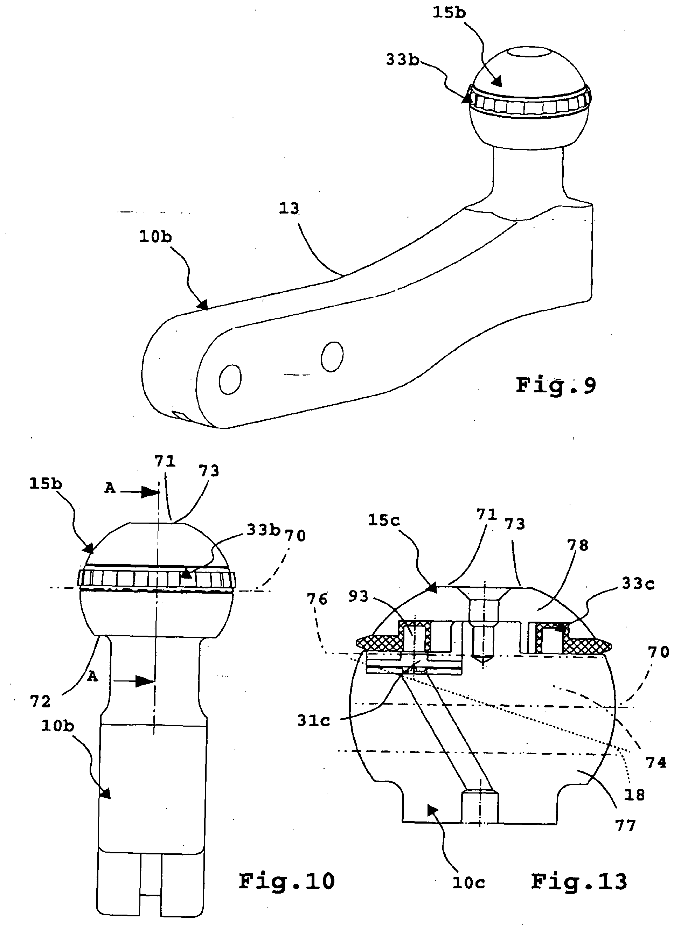

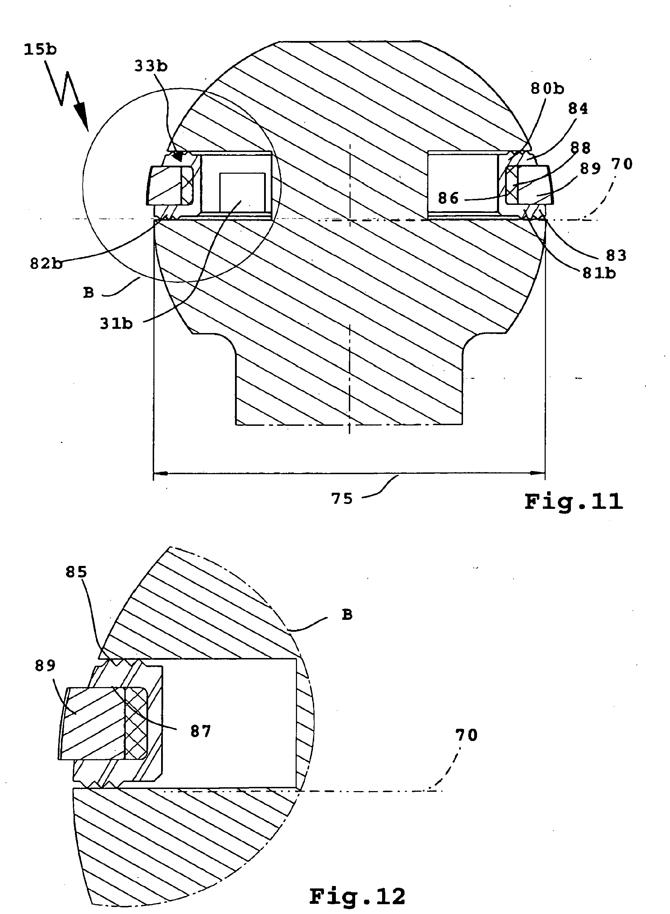

Es ist jedoch vorteilhaft, wenn eine Führungsnut noch weiter oben, d.h. weiter weg von der Äquatorialebene 70 an einem Kuppelkörper einer erfindungsgemäßen Anhängekupplung angeordnet ist. So ist beispielsweise bei einer Anhängekupplung 10c (Figur 13) eine dargestellte Führungsnut 47c vorgesehen, die im Bereich einer Quermittelebene 76 zwischen der Oberseite 71 und der Äquatorialebene 70 verläuft. Somit steht auch bei dieser Ausführungsform an der Oberseite 71 eine Stützfläche 73 bereit. Allerdings ist der Äquatorialbereich 74, d.h. der massive Teil des Kuppelkörpers 15b breiter. Somit kann die beispielsweise um eine Schrägneigung von 10°, besonders bevorzugt 15° oder auch 20°, insbesondere sogar 25° schräg zum Kuppelkörper 15b stehende Zugkupplungsaufnahme 18 (beispielhaft in Figur 11 eingezeichnet) am massiven Äquatorialbereich 74 des Kuppelkörpers 15b angreifen und findet dort festen Halt, kann also nicht vom Kuppelkörper 15b abgezogen werden.

An dieser Stelle sei bemerkt, dass der Kuppelkörper 15b zwar in der Zeichnung einstückig dargestellt ist, selbstverständlich aber auch mehrteilig sein kann, beispielsweise kann wie ein Kuppelkörper 15c der Anhängekupplung 10c ein Unterteil 77 und ein Oberteil 78 aufweisen kann, was beispielsweise die Montage der Anhängekupplung 10b oder 10c erleichtert. Oberteil 78 ist beispielsweise an das unterteilt 77 angeklebt, mit diesem verschraubt oder dergleichen.

Im Innern des Kuppelkörpers 15c ist ein schematisch dargestellter Sensor 31c vorgesehen, beispielsweise an einem Nutboden oder einer Seitenwand der Führungsnut 47c, die ganz allgemein auch eine Lager Ausnehmung bildet. Es versteht sich, dass wie beim Ausführungsbeispiel der oben beschriebenen Anhängekupplung 10 auch eine Kanalanordnung mit einem oder mehreren Montage-und/oder Sensorkanälen vorgesehen sein kann.

Es versteht sich, dass der Begriff "Führungsnut" allgemein als eine Lageraufnahme zum Lagern eines Mitnehmerkörpers zu verstehen ist. Man erkennt beispielsweise, dass die Führungsnut 47c einen anderen als einen U-förmigen Querschnitt aufweist.

Weiterhin kann beispielsweise der Mitnehmerkörper 33c aufgrund der mehrteiligen Bauweise des Kuppelkörpers 15c ohne weiteres auch einstückig sein, also einen Ring bilden, der in die Lageraufnahme oder Führungsnut 47c eingesetzt werden kann.

Ein Mitnehmerkörper 33c der Anhängekupplung 10c hat z.B. eine ringförmige Aufnahme 93 oder zweckmäßigerweise entlang eines Rings angeordnete Taschen zur Aufnahme von Gebern für den Sensor 31c, zum Beispiel magnetischen Gebern. Die Aufnahme 93 bzw. die Geber liegen dem Sensor 31c gegenüber.

Der Mitnehmerkörper 33b ist mehrteilig aufgebaut. Er umfasst einen Träger 80b, der in der Führungsnut 47b oder 47c anordenbar ist. Der Träger 80b bildet insgesamt einen Ring, ist jedoch aus mehreren, zum Beispiel 2, Ringsegmenten 81b, 82b zusammengesetzt. Dies erleichtert insbesondere die Montage des Trägers 80b in der Führungsnut 47b, 47c.

Der Träger 80b hat an seinen den Seitenwänden der Führungsnut 47b zugeordneten Seitenwänden 83, 84 Rippen oder Gleitvorsprünge 85, die an den Seitenwänden der Führungsnut 47b entlang gleiten und die Reibung verringern. Die Rippen oder Gleitvorsprünge 85 sind zweckmäßigerweise ringförmig. Vorzugsweise sind mehrere zueinander konzentrische Gleitvorsprünge bei einem erfindungsgemäßen Mitnehmerkörper vorgesehen. Es versteht sich, dass diese Gleitvorsprünge - es kann auch nur ein solcher vorgesehen sein - nicht nur an einem Träger wie beim Mitnehmerkörper 33b vorgesehen sein können, sondern auch an einer sonstigen Komponente eines erfindungsgemäß ausgestalteten Mitnehmers. Radial innen hat der Mitnehmerkörper 33b eine Umfangswand 86. Von den Seitenwänden 83, 84 und der Umfangswand 86 ist eine Aufnahme 87 begrenzt. Die Aufnahme 87 dient zum Halten und Aufnehmen einer Kompressionslage 88 und eines Mitnehmers 89. Die Kompressionslage 88 wird beispielsweise von einer Polyurethan-Schicht oder einem Polyurethan-Ring gebildet, der am Boden der Aufnahme 87 angeordnet ist. Die Kompressionslage 88 ist nachgiebig. Somit kann der Mitnehmer 89 nach radial innen in die Aufnahme 87 hinein verstellt werden, d.h. dass die Kompressionslage 88 dann nachgibt. Der Mitnehmer 89 selbst kann verhältnismäßig steif und/oder abriebfest sein. Die Nachgiebigkeit bei Einwirkung eines Drucks durch die Zugkupplungsaufnahme 18 wird quasi von der Kompressionslage 88 bereitgestellt.

Der Mitnehmer 89 ist zweckmäßigerweise von einem zahnriemenartigen Ring gebildet, der gedehnt werden kann, um am Träger 80b befestigt zu werden, wenn der Träger 80b bereits fertig montiert ist. Der Mitnehmer 89 steht nach radial außen vor den Träger 80b vor, so dass der für eine Drehmitnahme durch die Zugkupplungsaufnahme 18 bereitsteht.

In der Zeichnung ist die Kompressionslage 88 verhältnismäßig dünn im Vergleich zum Mitnehmer 89 dargestellt. Es versteht sich, dass die Kompressionslage 88 zweckmäßigerweise eine wesentlich größere Stärke oder Dicke aufweisen kann, so dass sie besonders nachgiebig ist. Gerade dadurch ist es möglich, dass der Mitnehmer 89 relativ stark verformt wird, um sich an eine Innenkontur der Zugkupplungsaufnahme 18 anzupassen und somit von dieser möglichst ohne Schlupf und Abrieb mitgenommen werden kann.

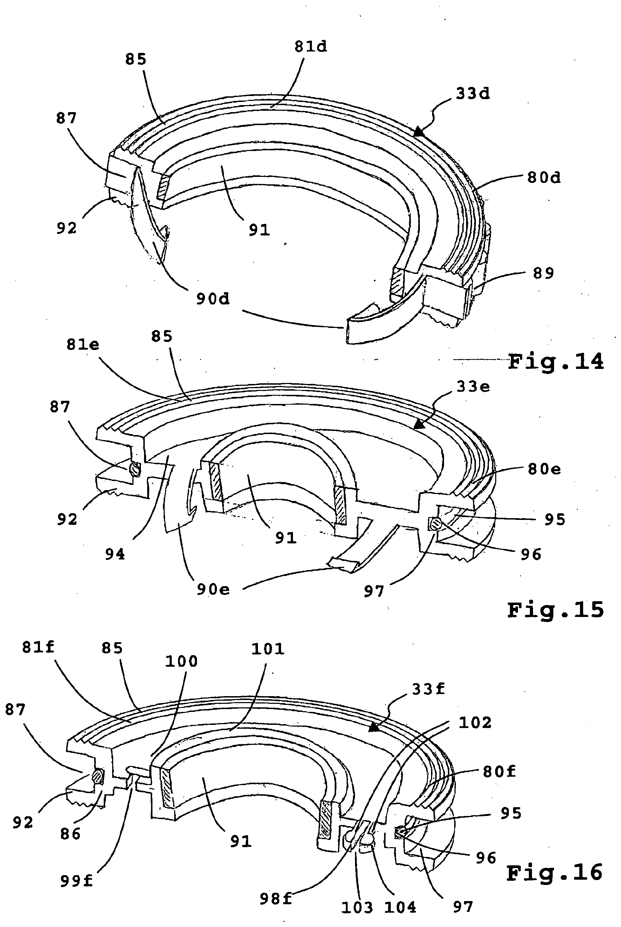

In den Figuren 14-22 sind verschiedene Ausgestaltungen von Trägern bzw. Ringsegmenten von Trägern erfindungsgemäßer Mitnehmerkörper dargestellt, bei denen unterschiedliche Verbindungstechniken zum Einsatz kommen, mit denen die Ringsegmente miteinander verbunden oder verbindbar sind. Gleiche oder gleichartige Komponenten sind bei diesen weiteren Ausführungsbeispielen mit den bereits bekannten Bezugszeichen versehen.

Ein Ringsegment 81d eines Trägers 80d eines Mitnehmerkörpers 33d weist beispielsweise vor seine Längsenden vorstehende Haken 90d auf, die in Hakenaufnahmen oder Widerlager eines in der Zeichnung nicht dargestellten, komplementären Ringsegments einhakbar sind. Am Innenumfang des Trägers 80d ist ein Geber-Ring 91 vorgesehen, der beispielsweise Magnet ist oder nicht dargestellte Einzelmagnete aufweist. Die Haken 90d stehen vor Stirnseiten 92 der Längsenden des Ringsegments 81d vor.

Bei einem Ringsegment 81e eines Trägers 80e eines Mitnehmerkörpers 33e sind Haken 90e vorgesehen, die ebenfalls in Aufnahmen eines komplementären, nicht dargestellten Ringsegments des Trägers 80e eingreifen können. Im Unterschied zum Ringsegment 81d sind jedoch die Haken 90e nicht in Umfangsrichtung des Ringsegments 81e verlaufend, sondern stehen vor obere und/oder untere Stirnseiten 94 des Ringsegments 81e vor. Dabei ist es vorteilhaft, wenn einer der Haken 90e an einer oberen Stirnseite 94, der andere Haken 90e an einer unteren Stirnseite 94 angeordnet ist, so dass die Haken 90e voneinander entgegengesetzten Seiten her in Aufnahmen einen dem nicht dargestellten weiteren Ringsegment des Mitnehmerkörpers 33e eingreifen.

Als zusätzliche Sicherung bzw. als verbesserter Halt des Ringsegments 81 am anderen Ringsegment dient eine Klammer 95, die vorliegend als Sprengring 96 ausgestaltet ist. Die Klammer 95 umgreift beide Ringsegmente jedenfalls soweit, dass ein größter Umfang des Mitnehmerkörpers 33e geklammert ist. Vorzugsweise ist an den Ringsegmenten des Mitnehmerkörpers 33e eine Aufnahme 97, beispielsweise eine Vertiefung am Boden der Aufnahme 87, vorgesehen.

Bei einem Mitnehmerkörper 33f sind dessen Ringsegmente 81f gleichartige ausgestaltet, d.h. es ist ein Gleichteilprinzip realisiert. Zur Verbindung der Ringsegmente 81f dienen Rastvorsprünge 98f, die in korrespondierende Rastaufnahmen 99f am jeweils anderen Ringsegment 81f einrasten können. Die Rastvorsprünge 98f und die Rastaufnahmen 99f sind einen den jeweiligen Längsend-Stirnseiten 92 vorgesehen. Die Rastvorsprünge 98f und die Rastaufnahmen 99f sind beispielsweise an einer Wand 100 angeordnet, die sich zwischen der Umfangswand 86 und einer Stützwand 101 zum Abstützen des Geber-Rings 91 befindet. Ein jeweiliger Rastvorsprung 98f umfasst beispielsweise 2 Rastarme 102, die flexibel sind und zwischen denen ein Abstand 103 vorhanden ist, so dass sie zueinander hin federn können. Damit ist es möglich, dass Haltevorsprünge 104 außer Eingriff mit einer korrespondierenden Ausnehmungen der Rastaufnahme 98f gelangen können.

Ein Mitnehmerkörper 33g entspricht im Wesentlichen dem Mitnehmerkörper 33f, wobei an seinen Ringsegmenten 81g etwas modifizierte Rastvorsprünge 98g vorhanden sind. Dessen Rastarme 102 sind zwar ebenfalls mit einem Abstand 103 voneinander beanstandet, sind jedoch stirnseitig durch ein Verbindungselement 105 miteinander verbunden. Dennoch können die beiden Arme 102 zueinander hin federn, um in Rastaufnahmen 99g am jeweils anderen Ringsegment 81g einzurasten. Dort sind Vertiefungen für die Haltevorsprünge 104 vorhanden. Beispielsweise sind die Rastaufnahmen 99g einen einer Wand 100 angeordnet, die von der Umfangswand 86 nach radial innen absteht.

Ein Mitnehmerkörper 33h entspricht im Wesentlichen dem Mitnehmerkörper 33d, wobei jedoch Ringsegmente 81h des Mitnehmerkörpers 33h einem Gleichteilprinzip folgen. Es können also 2 Ringsegmente 81h zu einem Gesamtring miteinander verbunden werden. Ein den Haken 90d entsprechender Haken 90h kann in eine Hakenaufnahme 106 am jeweils anderen Ringsegment 81h einen gehackt werden. Der Haken 90h ist also einen Umfangsrichtung verlaufender Haken. Sein Hakenvorsprung steht nach radial innen vor, so dass er in die beispielsweise im Bodenbereich der Aufnahme 87 für den Sprengring 96 oder der Aufnahme 87 für den Mitnehmer 89 angeordnete Hakenaufnahme 106 einhaken kann. Wenn beispielsweise der Sprengring 96 oder der Mitnehmer 88 am Träger 80h montiert sind, drücken sie den Haken 90h in die Hakenaufnahme 106 oder sichern den Haken 90h in der Hakenaufnahme 106.

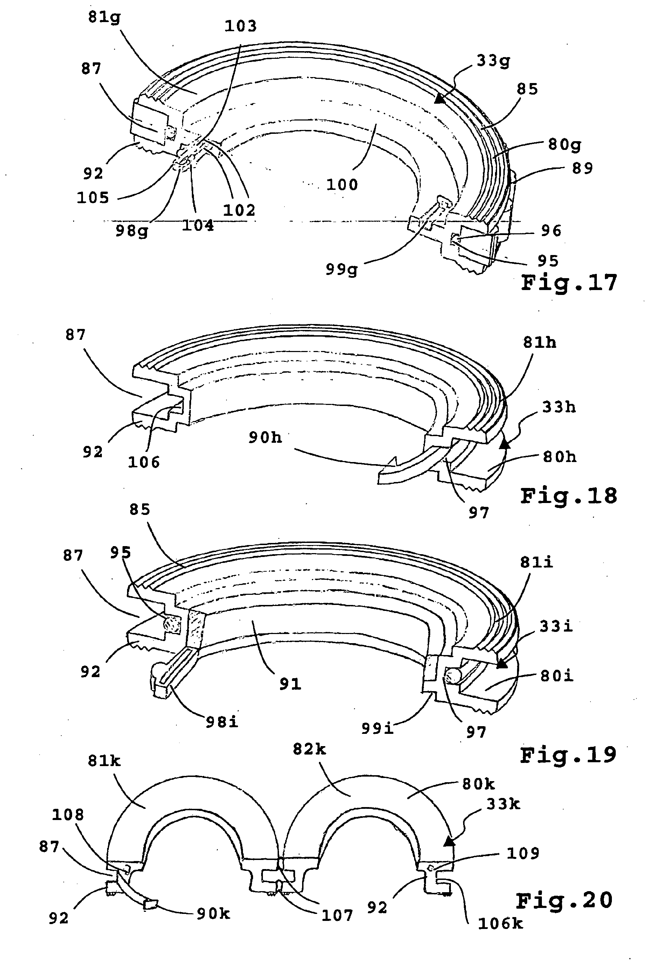

Bei einem Ringsegment 81i eines Trägers 80i eines Mitnehmers 33i (Figur 19) ist ein vor die Stirnseiten 92 vorstehender, nach radial innen federnd dar Rastvorsprung 98i, den man auch als einen Haken ansehen könnte, vorgesehen. Der Rastvorsprung 98i federt nach radial innen, um in eine Rastaufnahme 99i am jeweils anderen Ringsegment 81i ein zu rasten. Beispielsweise sind die Rastaufnahmen 99i an radial inneren Seiten der Umfangswände 86 vorgesehen. Ein jeweiliger Haltevorsprung 104 steht nach radial außen vor einen Rastvorsprung 98i vor, so dass er in eine korrespondierende Ausnehmung, nämlich die Rastaufnahme 99i einrasten kann.

Ein Mitnehmerkörper 33k umfasst Ringsegmente 81k, 82k, die durch ein Gelenk 107 gelenkig miteinander verbunden sind, beispielsweise durch ein Drehlager, oder wie beim Ausführungsbeispiel mittels eines Filmscharniers. Vor das Ringsegment 81k steht einen Haken 90k vor, der in eine Hakenaufnahme 106k am anderen Ringsegment 82k ein Haken kann. Im Prinzip entsprechen die Ringsegmente 81k und 82k dem Ringsegment 81h, sind jedoch gelenkig miteinander verbunden. Vorteilhaft ist zusätzlich zu der Verpackung noch ein formschlüssiger Halt vorgesehen. Beispielsweise steht vor die Stirnseite 92 des einen Ringsegments 81k ein Vorsprung 108 vor, der in eine Aufnahme 109 an der im montierten Zustand gegenüberliegenden Stirnseite 92 formschlüssig eingreift. Der Vorsprung 108 ist beispielsweise als ein Steck-Zapfen ausgestaltet.

Ein Träger 80m eines Mitnehmerkörpers 33m entspricht im Wesentlichen dem Träger 80h, jedenfalls was das Verbinden seiner Ringsegmente 81m mittels Haken 90m angeht, die in Hakenaufnahmen 106 einhakbar sind. Allerdings ist ein innovatives Konzept zur Befestigung von Gebern 35m, vorliegend beispielsweise Magneten realisiert, die zur Betätigung beispielsweise des Sensors 31 dienen. An seinem Innenumfang hat der Träger 80m Aufnahmen 110m, beispielsweise Taschen oder Steckaufnahmen, in die die Geber 35m einsteckbar sind. Die Geber 35m sind in den Aufnahmen 110m verrastbar. Beispielsweise haben die Geber 35m Steckvorsprünge 111, oberhalb derer oder an denen Rastvertiefungen 112 vorgesehen ist. Die Steckvorsprünge 111 können zwischen Rastvorsprüngen 113, die an einander gegenüberliegenden Innenwänden der Aufnahmen 100 vorgesehen sind, hindurch gesteckt werden, bis die Rastvorsprünge 113 in die Rastvertiefungen 112 einrasten.

Ein Träger 80o eines Mitnehmerkörpers 33o entspricht zwar etwa dem Träger 80i, jedenfalls was das Konzept des Verhakens bzw. Verbinden seiner Ringsegmente 81o angeht. Der Träger 80o hat Aufnahmen 110o zur Aufnahme von Gebern 35o, beispielsweise Magneten, oder auch sonstigen Elementen, die beispielsweise ein Feld oder Signal erzeugen können. Die Geber 35o haben an ihren Stirnseiten Aufnahmen 114, die in Vorsprünge 115 ein den jeweiligen Böden der Aufnahmen 110o eingreifen und so für einen festen Halt sorgen. Selbstverständlich können die Geber 35o auch in die Aufnahmen 110o eingeklebt werden. Auch ein Klemmsitz ist vorteilhaft.

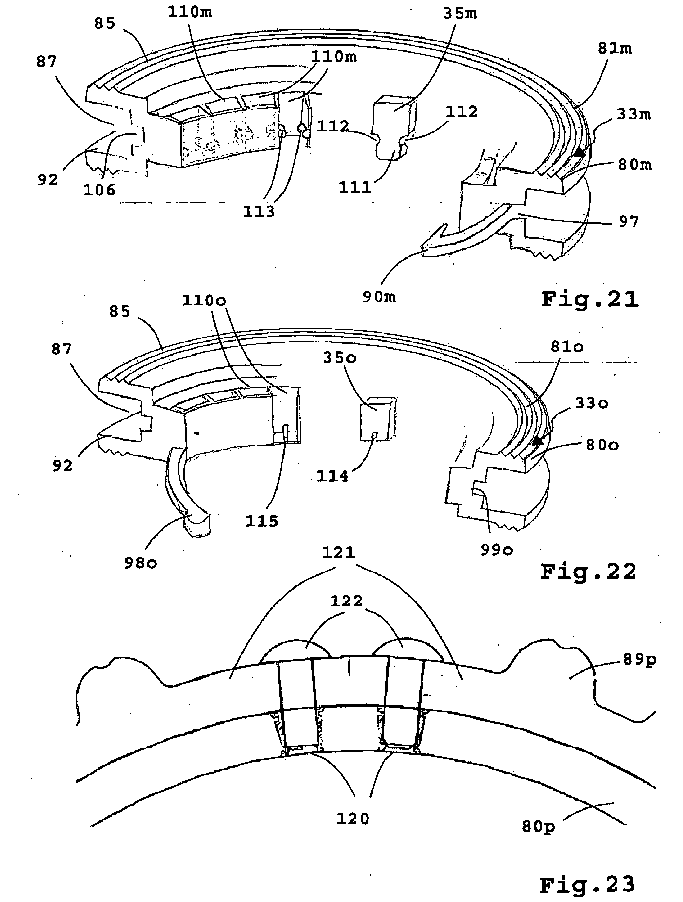

Ein Mitnehmer 89p ist an einem Träger 80p gemäß dem in Figur 22 dargestellten Konzept verschraubt. Beispielsweise hat der Träger 80p Bohrungen 120, insbesondere im Mikrogewinde oder dergleichen, die beispielsweise am Boden der Aufnahme 87 oder einem sonstigen Haltekontur vorgesehen sind. Längsenden 121 des Mitnehmers 89p sind von Bolzen 122 durchdrungen, beispielsweise Schraubbolzen, Nieten oder dergleichen, die in die Bohrungen oder Aufnahmen 120 eindringen. Somit kann also beispielsweise der Mitnehmer 89p relativ dehnfest sein, beispielsweise auch einen Einleger aus Metall umfassen. Dennoch ist der Mitnehmer 89p leicht am Träger 80p montierbar. Der Träger 80p kann selbstverständlich wie bei den obigen Ausführungsbeispielen 2 oder mehr Ringsegmente umfassen, die am jeweiligen Kuppelkörper angeordnet und dort miteinander verbunden sind.

An dieser Stelle ist auch nachzutragen, dass selbstverständlich die Ausführungsbeispiel gemäß Figuren 14-20 nur exemplarisch zu verstehen sind, d.h. dass anstelle von 2 Ringsegmenten selbstverständlich auch weitere, beispielsweise 3 oder 4 Ringsegmente zur Bildung eines Gesamt-Rings, vorgesehen sein können.

Selbstverständlich ist es nicht notwendig, einen strangartigen Mitnehmer, der offene Längsenden hat, direkt am Träger zu befestigen, wie beim Ausführungsbeispiel gemäß Figur 23. Beispielsweise sind Längsenden 122 eines Mitnehmers 89q an einem Träger, beispielsweise dem Träger 80g, anhand eines Verbindungsglieds 125 miteinander verbunden. Das Verbindungsglied 125 ist beispielsweise als ein Stanz-Biegeteil ausgestaltet. Vorzugsweise besteht Das Verbindungsglied 125 aus Metall, zum Beispiel Stahlblech, Aluminiumblech oder dergleichen.

Das Verbindungsglied 125 weist eine Basis 126 auf, die sich über die jeweiligen Längsenden 121 des Mitnehmers 89q erstreckt. Beispielsweise ist die Basis 126 am einen Längsende 121 angeklebt. Von der Basis 126 stehen an einander entgegengesetzten Seiten jeweils Arme 127 ab. Die Arme 127 können mehrfach oben gebogen werden, so dass sie in Vertiefungen zwischen den Mitnahmevorsprüngen 41 oder Zähnen eingreifen können. Es ist vorteilhaft, die Arme 127 und oder die Basis 126, jedenfalls insgesamt das Verbindungsglied 125 formschlüssig, beispielsweise mittels einem Körner, mit dem Mitnehmer 89q zu verbinden.

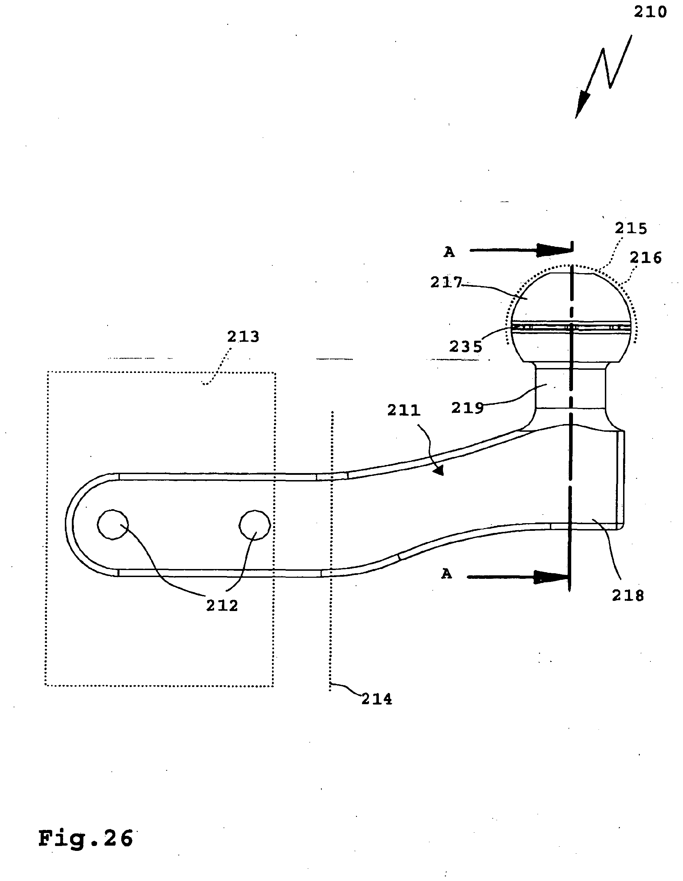

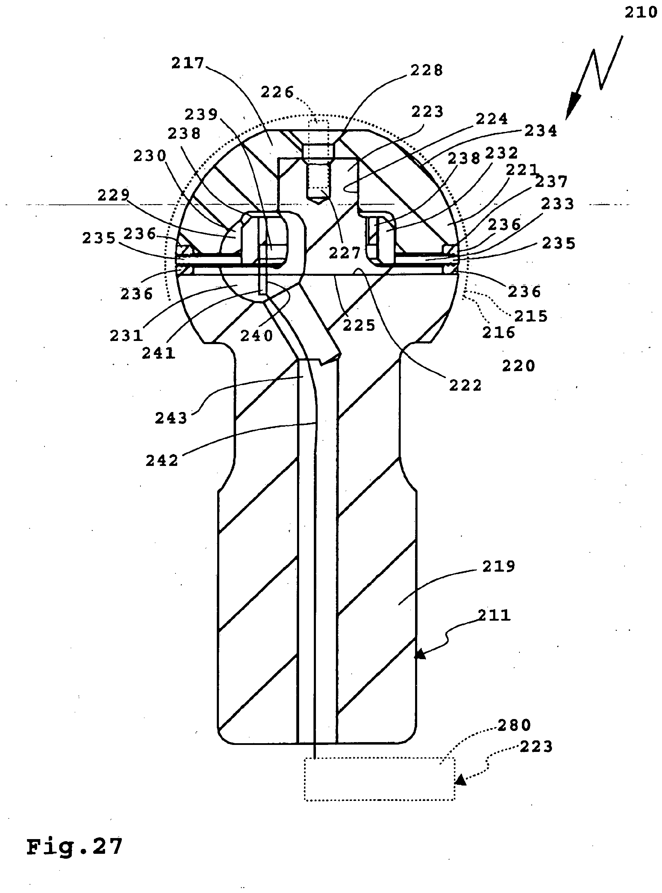

Bei einer nachfolgend im Zusammenhang mit den Figuren 26 und 27 erläuterten Anhängekupplung sind die vorgenannten Maßnahmen vorteilhaft ebenfalls einsetzbar, obwohl die Anhängekupplung eine an sich eigenständige Erfindung darstellt. Bei diesem Ausführungsbeispiel wird deutlich, dass der Kuppelkörper, nachfolgend auch als Kupplungselement bezeichnet, auch mehrteilig sein kann. Ferner kann ein insbesondere ringförmiger Mitnehmer oder Mitnehmerkörper auch tief ins Innere eines Kuppelkörpers oder Kupplungselements hineinragen.

Ein Kupplungsarm 211 einer Anhängekupplung 210 hat beispielsweise Montagebohrungen 212 oder sonstige Verbindungsmittel zur fahrzeugfesten Verbindung mit einem Zugfahrzeug 213, beispielsweise einem Personenkraftwagen. Der Kupplungsarm 211 steht beispielsweise vor einem Stoßfänger 214 des Zugfahrzeuges 213 vor, so dass eine Kupplung 215 eines Anhängers 216 an einem Kupplungselement 217 der Anhängekupplung 210 befestigt werden kann. Das Kupplungselement 217 ist an einem freien Ende 218 des Kupplungsarmes 211 angeordnet. Das Kupplungselement 217 ist beispielsweise als eine Kupplungskugel ausgestaltet. Das Kupplungselement 217 befindet sich auf einem Stützabschnitt 219, der am freien Ende 218 nach oben (in der Gebrauchsstellung) vorsteht.

Anstelle einer festen Montage des Kupplungsarms 211, d.h. einem feststehenden, unbeweglichen Kupplungsarm, könnte das nachfolgend im Detail beschriebene Prinzip auch bei Kupplungsarmen verwendet werden, die beispielsweise schwenkbar und/oder verschieblich am Zugfahrzeug mittels eines Lagers gelagert ist oder auch bei einem Kupplungsarm, der beispielsweise lösbar am Zugfahrzeug befestigbar ist, insbesondere mittels einer Steckverbindung.

Die Kupplungskugel bzw. das Kupplungselement 217 ist mehrteilig, vorzugsweise zweiteilig.

Ein unteres, direkt am Stützabschnitt 219 befestigtes Kupplungselementteil 220 bildet dabei ein erstes Kupplungselementteil, auf dem oder an dem ein zweites Kupplungselementteil 221 angeordnet ist. Vorzugsweise ist das Kupplungselementteil 220 mit dem Kupplungsarm 211 einstückig, beispielsweise einstückig mit dem Stützabschnitt 219.

Das Kupplungselement 217 ist quasi äquatorial geteilt bzw. eine Äquatoriallinie verläuft etwa im Übergangsbereich zwischen dem ersten und zweiten Kupplungselementteils 220, 221.

Von einer dem zweiten Kupplungselementteil 221 zugewandten Stirnseite 222 des ersten Kupplungselementteils 220 steht ein Verbindungsvorsprung 223 vor, der in eine Aufnahme 224 an der der Stirnseite 222 zugewandten Stirnseite 225 des zweiten Kupplungselementteils 221 eingreift, vorzugsweise formschlüssig. Zwischen den beiden Komponenten könnte eine Schraubverbindung vorgesehen sein. Bevorzugt ist es, wenn der Verbindungsvorsprung 223 in die Aufnahme 224 eingepresst wird. Aber auch ein Verschweißen, insbesondere Punktverschweißen, wäre denkbar. Beim Ausführungsbeispiel ist jedoch eine Schraube 226 in eine Schraubaufnahme 227 eingeschraubt, die das erste und zweite Kupplungselementteil 220, 221 durchsetzt. Beispielsweise erstreckt sich die Schraubaufnahme 227 von einer oberen, freien Stirnfläche 228 des oberen Kupplungselementteils 221.

Das Kupplungselementteil 221 bildet quasi eine Kappe, die das untere Kupplungselementteil 220 abdeckt.

Durch die Montage der beiden Kupplungselementteile 220, 221 aneinander wird ein Aufnahmeraum 229 im Inneren des Kupplungselements 217 verschlossen. Der Aufnahmeraum 229 hat mehrere Bereiche, nämlich einen unteren Teil 231, der sich im ersten, unteren Kupplungselementteil 220 befindet, sowie einen oberen Teil 230, der vom oberen, zweiten Kupplungselementteil 221 bereitgestellt wird. Der obere Teil 230 ist vorliegend etwas größer ausgestaltet, könnte aber auch anders als in der Zeichnung dargestellt kleiner (d.h. z.B. weniger hoch) sein als der untere Teil 231. Von den beiden Teilen 230, 231 des Aufnahmeraums 229 weg erstreckt sich noch ein Ringraum 232 des Aufnahmeraums, der um den Verbindungsvorsprung 223 herum verläuft.

Der Aufnahmeraum 229 ist also, wenn die Kupplungselementteile 220, 221 miteinander verbunden sind, insbesondere dauerhaft miteinander verbunden sind, im Wesentlichen geschlossen. Allerdings ist vorzugsweise vorgesehen, dass eine oder mehrere Durchtrittsöffnungen sich in den Aufnahmeraum 229 hinein erstrecken. Beispielsweise ist bei der Anhängekupplung 210 eine Durchtrittsöffnung 233 vorhanden. Die Durchtrittsöffnung 233 erstreckt sich von einer Außenseite des Kupplungselements 217 in den Aufnahmeraum 229 hinein, insbesondere in Richtung des Ringraumes 232. In der Durchtrittsöffnung 233 ist ein Mitnehmer 235 angeordnet, der außenseitig, vorliegend radial außenseitig, vor eine Stützfläche 234 am Außenumfang des Kupplungselements 217 vorsteht.

Wenn die Kupplung 215 des Anhängers 216 auf der Stützfläche 234 aufliegt, beispielsweise eine Pfanne einer Zugkugelkupplung, kommt sie in Berührkontakt mit einem Mitnehmer 235. Der Mitnehmer 235 umfasst beispielsweise einen Federring, einen Gummiring oder sonstige, zweckmäßigerweise einen Klemmsitz oder einen Reibschluss und gegebenenfalls einen Formschluss mit der Kupplung 215 herstellende Komponenten. Wenn dann die Kupplung 215 auf dem Kupplungselement 217 dreht, z.B. bei einer Kurvenfahrt, betätigt sie den Mitnehmer 235 zu einer entsprechenden Drehbetätigung. Am Außenumfang der Durchtrittsöffnung 233, den Mitnehmer 235 dort abdichtend aufnehmend, ist eine Dichtung 236 vorgesehen, die einen Schmutzeintritt von außen in Richtung des Aufnahmeraums 229 verhindert. Beispielsweise ist jeweils stirnseitig eine Dichtung 236 am Mitnehmer 235 angeordnet, so dass dieser sandwichartig in den beiden Dichtungen 236 verläuft. Für die Dichtung 236 weist die Durchtrittsöffnung 233 eine Aufweitung 237 auf. Man könnte die Aufweitung 237 als Dichtungsaufnahmeraum bezeichnen.

Der Mitnehmer 235 erstreckt sich in den Innenraum des Kupplungselements 217, d.h. in den Aufnahmeraum 229 hinein. Dort betätigt der Mitnehmer 235 einen Encoder 238, der ringförmig ist, also einen Art Encoderring darstellt. Der Mitnehmer 235 verdreht den Encoder 238 in Abhängigkeit von einer Krafteinwirkung durch die Kupplung 215. Mithin dreht also der Encoder 238, wenn der Mitnehmer 235 drehbetätigt wird.

Der Encoder 238 enthält beispielsweise Erregermagnete, optische Markierungen oder dergleichen, um einen Sensor 239 zu betätigen. Bei dem Sensor 239 handelt es sich beispielsweise um einen optischen Sensor, beim Ausführungsbeispiel jedoch um einen magnetischen Sensor. Der Sensor 239 wird also durch den Encoder 238 in Abhängigkeit von dessen Drehposition betätigt und erzeugt ein Sensorsignal, das von einer Auswerteeinheit 240 verarbeitet, zumindest vorverarbeitet wird. Die Auswerteeinheit 240 verstärkt beispielsweise das Sensorsignal und/oder nimmt Korrekturen vor, beispielsweise Fehlerkorrekturen. Die Auswerteeinheit 240 umfasst eine Platine 241, an der unmittelbar auch der Sensor 239 angeordnet ist. Von der Platine 241 bzw. der Auswerteeinheit 240 führt eine Leitung 242 weg, über das beispielweise ein Pulsweitenmodulationssignal (PWM-Signal) übertragen werden könnte. Für die Leitung 242 ist ein Kanal 243 vorgesehen, der vom Aufnahmeraum 229 bis zu einer Unterseite des Kupplungsarmes 211 verläuft. Es ist auch denkbar, dass sich der Kanal 243 beispielsweise bis zum fahrzeugseitigen Ende des Kupplungsarmes 211 erstrecken könnte, wo dann eine weiterverarbeitende Einheit, z.B. ein Buskoppler zur Ankopplung an einen fahrzeugseitigen Datenbus 280, z.B. einen CAN-Bus oder FlexRay-Bus oder LIN-Bus, vorgesehen ist. An dieser Stelle sei bemerkt, dass selbstverständlich ein solcher Buskoppler auch unmittelbar am Sensor, jedenfalls direkt im Aufnahmeraum 229 angeordnet sein könnte. Somit werden also die Bussignale direkt vor Ort erzeugt, was eine optimale Signalqualität darstellt.

Der Aufnahmeraum 229 ist in der Art einer Aushöhlung ausgestaltet, d.h. er ist optimal an die magnetischen Eigenschaften des Encoders 238 angepasst. Beispielsweise stellt er Reflexionsflächen, Flussleitflächen oder dergleichen bereit. Es ist auch denkbar, dass sich unmittelbar im Aufnahmeraum 229 eine Beschichtung befindet, beispielsweise eine elektromagnetisch leitende oder abschirmende Beschichtung oder dergleichen.

Der Encoder 238 weist zweckmäßigerweise einen oder mehrere magnetische Pole auf, die in axialer oder radialer Richtung polarisiert sind. Der Sensor 239 ist zweckmäßigerweise ein Drehwinkelsensor, bevorzugt ein triaxialer Sensor, der das um ihn herum wandernde Magnetfeld beispielsweise in axialer, insbesondere senkrechter Richtung, erfasst.

Prinzipiell möglich ist es auch, einen Aufnahmeraum für einen Sensor bei einer erfindungsgemäßen Anhängekupplung durch eine Bohrung, die in das Kupplungselement eingebracht wird, herzustellen. Auch ein Ausfräsen ist möglich. Unmittelbar in dem Aufnahmeraum 229 können auch weitere Bauelemente untergebracht werden, da dieser verhältnismäßig groß bemessen ist. Beispielsweise könnte ein Steuergerät dort angeordnet sein.

Anstelle des drehwinkelsensitiven Sensors 239 könnte selbstverständlich in einer erfindungsgemäßen Anhängekupplung, bzw. deren Aufnahmeraum, auch eine Kraftmessung, eine Momentenmessung, eine Wegmessung oder dergleichen durch entsprechend geeignete Sensoren (Wegsensoren/Winkelsensoren, Kraftsensoren oder Momentensensoren) realisiert sein.

## Patentansprüche

1. Anhängekupplung für ein Kraftfahrzeug (12), insbesondere ein Personen-Kraftfahrzeug (12), zum Anhängen eines Anhängers (17) an das Kraftfahrzeug (12), mit einem an dem Kraftfahrzeug (12) befestigbaren Kuppelkörperträger (13) und einem an einem freien Endbereich des Kuppelkörperträgers (13) angeordneten, insbesondere außenseitig kugelförmigen, Kuppelkörper (15), auf den eine Zugkupplungsaufnahme (18) einer Zugkupplung (16) des Anhängers (17) aufsetzbar ist, wobei der Kuppelkörper (15) für die Zugkupplungsaufnahme (18) einen diese drehbar lagernden Lagerkörper zum insbesondere mehrachsig drehgelenkigen Schwenken relativ zu dem Kuppelkörperträger (13) bildet, **dadurch gekennzeichnet, dass** sie einen an dem Kuppelkörper (15) drehbar gelagerten, ringförmigen Mitnehmerkörper (33) aufweist, der von der Zugkupplungsaufnahme (18) mitnehmbar und relativ zu dem Kuppelkörper (15) verdrehbar ist und einen Bestandteil einer Sensoranordnung (30) zur Erfassung einer Winkelstellung der Zugkupplung (16) relativ zu dem Kuppelkörperträger (13) bildet, wobei der Kuppelkörper (15) eine Sensoraufnahme (32) aufweist, in der eine Komponente der Sensoranordnung (30), nämlich mindestens ein Sensor (31), zur Erfassung einer Winkelstellung der Zugkupplung (16) relativ zu dem Kuppelkörperträger (13) angeordnet oder anordenbar ist.

2. Anhängekupplung nach Anspruch 1, **dadurch gekennzeichnet, dass** der Kuppelkörper (15) außenseitig kugelförmig ist und zwischen seiner von dem Kuppelkörperträger (13) abgewandten Oberseite und dem Kuppelkörperträger einen Äquatorialbereich mit einem maximalen Außenumfang aufweist, und dass der Mitnehmerkörper (33) oberhalb oder unterhalb des Äquatorialbereichs des Kuppelkörpers (15), insbesondere oberhalb oder unterhalb einer Äquatoriallinie oder Äquatorialebene des Kuppelkörpers (15), angeordnet ist, so dass der maximale Außenumfang des Kuppelkörpers (15) in dem Äquatorialbereich zum Halten der Zugkupplungsaufnahme (18) bereit steht.

3. Anhängekupplung nach Anspruch 2, **dadurch gekennzeichnet, dass** eine Breite des Äquatorialbereichs, oberhalb oder unterhalb dessen der Mitnehmerkörper (33) angeordnet und in dem der Kuppelkörper (15) nicht durch den Mitnehmerkörper (33) geschwächt ist, so bemessen ist, dass die Zugkupplungsaufnahme (18) bei einer Schrägstellung um einen vorbestimmten Winkel zu einer Äquatorialebene des Kuppelkörpers (15) den Kuppelkörper (15) im Bereich seines maximalen Außenumfangs in dem Äquatorialbereich umgreifen kann, wobei der vorbestimmte Winkel zweckmäßigerweise mindestens 10 Grad zur Horizontalen, vorzugsweise mindestens 15 Grad zur Horizontalen, besonders bevorzugt mindestens 20 Grad zur Horizontalen, insbesondere mindestens 25 Grad zur Horizontalen beträgt.

4. Anhängekupplung nach einem der vorhergehenden Ansprüche, **dadurch gekennzeichnet, dass** der Mitnehmerkörper (33) unterhalb der Oberseite des Kuppelkörpers (15) angeordnet ist, so dass an dem Kuppelkörper (15) eine obere Stützfläche an seiner Oberseite vorhanden ist, und/oder dass der Mitnehmerkörper (33) etwa im Bereich oder oberhalb einer Quermittelebene des Kuppelkörpers (15) angeordnet ist, wobei die Quermittelebene zwischen der Oberseite des Kuppelkörpers (15) und einer Äquatorialebene des Kuppelkörpers verläuft.

5. Anhängekupplung nach einem der vorhergehenden Ansprüche, **dadurch gekennzeichnet, dass** der Mitnehmerkörper (33) als ein einteiliger Ring ausgestaltet ist oder aus mindestens zwei Ringsegmenten gebildet ist oder mindestens 2 Ringsegmente umfasst.

6. Anhängekupplung nach einem der vorhergehenden Ansprüche, **dadurch gekennzeichnet, dass** mindestens 2 Ringsegmente des Mitnehmerkörpers mittels einer Rastanordnung und/oder mindestens einer Klammer und/oder anhand einer Verschraubung und/oder mittels einer Hakenanordnung miteinander verbunden oder verbindbar sind, wobei die mindestens eine Klammer zweckmäßigerweise einen insbesondere als Sprengring ausgestalteten, in Umfangsrichtung einen Schlitz oder eine Ausnehmung aufweisenden Ring umfasst, der auf die Ringsegmente aufklipsbar ist und sich über einen größten Umfang eines durch die Ringsegmente gebildeten Rings hinweg erstreckt.

7. Anhängekupplung nach einem der vorhergehenden Ansprüche, **dadurch gekennzeichnet, dass** der Mitnehmerkörper (33) oder ein zum Kontakt mit der Zugkupplung in Kontakt vorgesehener Mitnehmerring des Mitnehmerkörpers (33), insbesondere durch die Zugkupplung (16) oder eine Haltebacke (21) der Zugkupplung (16), und/oder im Sinne eines Aufweitens für die Montage an dem Kuppelkörper (15) elastisch verformbar ist.

8. Anhängekupplung nach einem der vorhergehenden Ansprüche, **dadurch gekennzeichnet, dass** an dem Mitnehmerkörper (33) mindestens ein exzentrischer, elastischer oder nicht elastischer Vorsprung angeordnet ist und/oder dass der Mitnehmerkörper (33) nach radial außen vorstehende, insbesondere flexible oder elastische, Mitnahmevorsprünge (41) und/oder eine Reibschlussfläche aufweist und/oder eine ballige Außenkontur und/oder Schlitze aufweist.

9. Anhängekupplung nach einem der vorhergehenden Ansprüche, **dadurch gekennzeichnet, dass** der Mitnehmerkörper (33) und/oder ein Lagerbereich des Kuppelkörpers (15) zum Lagern des Mitnehmerkörpers (33) mit einer Gleitbeschichtung oder einer Gleitlage versehen sind und/oder der Mitnehmerkörper (33) ein Lagerelement, insbesondere einen Wälzlager oder Rollenlager, zum Lagern an dem Kuppelkörper (15) aufweist.

10. Anhängekupplung nach einem der vorhergehenden Ansprüche, **dadurch gekennzeichnet, dass** der Mitnehmerkörper (33) an einer, insbesondere unmittelbar in eine Sensoraufnahme (32) übergehenden oder diese schneidenden, Lageraufnahme (34), insbesondere einer Führungsnut (47), des Kuppelkörpers (15) gelagert ist, wobei die Lageraufnahme (34) vorteilhaft an mindestens einem Bereich eine zu einer vollständigen Aufnahme eines Abschnitts (64) des Mitnehmerkörpers (33) ausreichende Tiefe aufweist, so dass der Abschnitt (64) des Mitnehmerkörpers (33) nicht oder nur mit Mitnahmevorsprüngen (41) vor die Lageraufnahme (34) nach außen vorsteht, und/oder wobei vorteilhaft ein Abschnitt (65) des Mitnehmerkörpers (33) durch eine von der Zugkupplungsaufnahme (18) ausgeübte Beaufschlagung auf einen anderen Abschnitt (64) des Mitnehmerkörpers (33) aus der Lageraufnahme (34), insbesondere durch eine elastische Verformung des Mitnehmerkörpers (33) und/oder eine Verschiebung des Mitnehmerkörpers (33), heraus drückbar ist.

11. Anhängekupplung nach einem der vorhergehenden Ansprüche, **dadurch gekennzeichnet, dass** der Mitnehmerkörper (33) mindestens einen Sensor und/oder mindestens einen Geber zum Betätigen des mindestens einen Sensors (31), insbesondere eine Magnetanordnung mit mindestens einem Magneten (35) und/oder einen optischen Geber, insbesondere eine Reflexionsmarkierung, und/oder ein magnetisiertes Kunststoffmaterial mit magnetischen Partikeln umfasst, wobei der Mitnehmerkörper zweckmäßigerweise mindestens eine Aufnahme, insbesondere eine Tasche, zur Aufnahme des mindestens einen Gebers zur Betätigung des mindestens Sensors, insbesondere zur Aufnahme eines Magneten, und/oder zur Aufnahme des Sensors aufweist, wobei die Aufnahme zweckmäßigerweise als eine Steckaufnahme zum Einstecken des mindestens einen Gebers oder Sensors ausgestaltet ist und/oder vorteilhaft Rastmittel zum Verrasten des mindestens einen Gebers oder Sensors aufweist.

12. Anhängekupplung nach einem der vorhergehenden Ansprüche, **dadurch gekennzeichnet, dass** die Sensoranordnung (30) mindestens eine Lichtquelle mit einem zum Mitnehmerkörper (33) gerichteten Licht-Austrittsbereich zur Erzeugung von durch den Mitnehmerkörper (33) reflektierbarem Licht aufweist, dass ein Licht-Erfassungsbereich des mindestens einen optischen Sensors (31) zur Erfassung des reflektierten Lichts ausgerichtet ist, und dass die Sensoranordnung (30) Signalmittel zur Erzeugung eines eine Winkelstellung des Mitnehmerkörpers (33) relativ zu dem Kuppelkörperträger (13) anzeigenden Winkelsignals anhand eines Messsignals aufweist, das von dem mindestens einen optischen Sensor (31) anhand von durch den Mitnehmerkörper (33) reflektiertem Licht erzeugbar ist.

13. Anhängekupplung nach einem der vorhergehenden Ansprüche, **dadurch gekennzeichnet, dass** der Mitnehmerkörper radial mindestens 2 Komponenten oder Schichten enthält und/oder dass der Mitnehmerkörper einen radial innen bezüglich des Kuppelkörpers angeordneten Träger und einen radial außen bezüglich des Kuppelkörpers an dem Träger angeordneten, insbesondere ringförmigen, Mitnehmer umfasst, wobei der Mitnehmer zur Drehmitnahme durch die Zugkupplungsaufnahme vorgesehen ist.

14. Anhängekupplung nach Anspruch 13, **dadurch gekennzeichnet, dass** der Träger mehrteilig, insbesondere zweiteilig, ist und/oder dass der Träger eine Aufnahme für den Mitnehmer aufweist, wobei zweckmäßigerweise zwischen dem Mitnehmer und dem Träger eine Kompressionsschicht vorgesehen ist, insbesondere aus Polyurethan, die bei Druckbeaufschlagung des Mitnehmers insbesondere durch die Zugkupplungsaufnahme in Richtung des Trägers nachgibt und ein Verformen des Mitnehmers in Richtung des Trägers ermöglicht und/oder wobei der Mitnehmer vorteilhaft einstückig und derart flexibel ist, dass er auf oder in den bereits am Kuppelkörper montierten Träger auf- oder einbringbar ist oder zweckmäßigerweise mindestens 2 Ringsegmente umfasst, die miteinander und/oder mit dem Träger verbindbar, insbesondere verschraubbar und/oder verklebbar, sind.

15. Anhängekupplung nach einem der vorhergehenden Ansprüche, **dadurch gekennzeichnet, dass** der Kuppelkörper (15) einstückig oder mehrteilig ist und/oder dass die Sensoraufnahme (32) mit einem von dem Kuppelkörperträger (13) zu der Sensoraufnahme (32) des Kuppelkörpers (15) führenden Anschlusskanal (48) zur Aufnahme einer Verbindungsleitung (55) zu dem mindestens einen Sensor (31) verbunden ist und zwischen dem Anschlusskanal (48) und einer Außenoberfläche des Kuppelkörperträgers (13) oder des Kuppelkörpers (15) mindestens ein Montagekanal (51) zur Montage mindestens eines Bauteils der Sensoranordnung (30) und/oder der Verbindungsleitung (55) in der Sensoraufnahme (32) und/oder in dem Anschlusskanal (48) verläuft.

16. Anhängekupplung für ein Kraftfahrzeug (12), insbesondere ein Personen-Kraftfahrzeug (12), zum Anhängen eines Anhängers (17) an das Kraftfahrzeug (12), mit einem an dem Kraftfahrzeug (12) befestigbaren Kuppelkörperträger (13) und einem an einem freien Endbereich des Kuppelkörperträgers (13) angeordneten, insbesondere außenseitig kugelförmigen, Kuppelkörper (15), auf den eine Zugkupplungsaufnahme (18) einer Zugkupplung (16) des Anhängers (17) aufsetzbar ist, wobei der Kuppelkörper (15) für die Zugkupplungsaufnahme (18) einen diese drehbar lagernden Lagerkörper zum insbesondere mehrachsig drehgelenkigen Schwenken relativ zu dem Kuppelkörperträger (13) bildet, **dadurch gekennzeichnet, dass** sie einen an dem Kuppelkörper (15) drehbar gelagerten, ringförmigen Mitnehmerkörper (33) aufweist, der von der Zugkupplungsaufnahme (18) mitnehmbar und relativ zu dem Kuppelkörper (15) verdrehbar ist und einen Bestandteil einer Sensoranordnung (30) zur Erfassung einer Winkelstellung der Zugkupplung (16) relativ zu dem Kuppelkörperträger (13) bildet, wobei der Kuppelkörper (15) mehrteilig ist.

17. Anhängekupplung für ein Kraftfahrzeug (12), insbesondere ein Personen-Kraftfahrzeug (12), zum Anhängen eines Anhängers (17) an das Kraftfahrzeug (12), mit einem an dem Kraftfahrzeug (12) befestigbaren Kuppelkörperträger (13) und einem an einem freien Endbereich des Kuppelkörperträgers (13) angeordneten, insbesondere außenseitig kugelförmigen, Kuppelkörper (15), auf den eine Zugkupplungsaufnahme (18) einer Zugkupplung (16) des Anhängers (17) aufsetzbar ist, wobei der Kuppelkörper (15) für die Zugkupplungsaufnahme (18) einen diese drehbar lagernden Lagerkörper zum insbesondere mehrachsig drehgelenkigen Schwenken relativ zu dem Kuppelkörperträger (13) bildet, **dadurch gekennzeichnet, dass** sie einen an dem Kuppelkörper (15) drehbar gelagerten, ringförmigen Mitnehmerkörper (33) aufweist, der von der Zugkupplungsaufnahme (18) mitnehmbar und relativ zu dem Kuppelkörper (15) verdrehbar ist und einen Bestandteil einer Sensoranordnung (30) zur Erfassung einer Winkelstellung der Zugkupplung (16) relativ zu dem Kuppelkörperträger (13) bildet, dass der Mitnehmerkörper (33) unterhalb der Oberseite des Kuppelkörpers (15) angeordnet ist, so dass an dem Kuppelkörper (15) eine obere Stützfläche an seiner Oberseite vorhanden ist, und dass an dem Mitnehmerkörper (33) mindestens ein exzentrischer, elastischer oder nicht elastischer Vorsprung angeordnet ist und/oder dass der Mitnehmerkörper (33) nach radial außen vorstehende, insbesondere flexible oder elastische, Mitnahmevorsprünge (41) aufweist.

18. Anhängekupplung für ein Kraftfahrzeug (12), insbesondere ein Personen-Kraftfahrzeug (12), zum Anhängen eines Anhängers (17) an das Kraftfahrzeug (12), mit einem an dem Kraftfahrzeug (12) befestigbaren Kuppelkörperträger (13) und einem an einem freien Endbereich des Kuppelkörperträgers (13) angeordneten, insbesondere außenseitig kugelförmigen, Kuppelkörper (15), auf den eine Zugkupplungsaufnahme (18) einer Zugkupplung (16) des Anhängers (17) aufsetzbar ist, wobei der Kuppelkörper (15) für die Zugkupplungsaufnahme (18) einen diese drehbar lagernden Lagerkörper zum insbesondere mehrachsig drehgelenkigen Schwenken relativ zu dem Kuppelkörperträger (13) bildet, **dadurch gekennzeichnet, dass** sie einen an dem Kuppelkörper (15) drehbar gelagerten, ringförmigen Mitnehmerkörper (33) aufweist, der von der Zugkupplungsaufnahme (18) mitnehmbar und relativ zu dem Kuppelkörper (15) verdrehbar ist und einen Bestandteil einer Sensoranordnung (30) zur Erfassung einer Winkelstellung der Zugkupplung (16) relativ zu dem Kuppelkörperträger (13) bildet, dass der Mitnehmerkörper (33) an einer Lageraufnahme (34), insbesondere einer Führungsnut (47), des Kuppelkörpers (15) gelagert ist und ein Abschnitt (65) des Mitnehmerkörpers (33) durch eine von der Zugkupplungsaufnahme (18) ausgeübte Beaufschlagung auf einen anderen Abschnitt (64) des Mitnehmerkörpers (33) aus der Lageraufnahme (34), insbesondere durch eine elastische Verformung des Mitnehmerkörpers (33) und/oder eine Verschiebung des Mitnehmerkörpers (33), heraus drückbar ist.

19. Anhängekupplung für ein Kraftfahrzeug (12), insbesondere ein Personen-Kraftfahrzeug (12), zum Anhängen eines Anhängers (17) an das Kraftfahrzeug (12), mit einem an dem Kraftfahrzeug (12) befestigbaren Kuppelkörperträger (13) und einem an einem freien Endbereich des Kuppelkörperträgers (13) angeordneten, insbesondere außenseitig kugelförmigen, Kuppelkörper (15), auf den eine Zugkupplungsaufnahme (18) einer Zugkupplung (16) des Anhängers (17) aufsetzbar ist, wobei der Kuppelkörper (15) für die Zugkupplungsaufnahme (18) einen diese drehbar lagernden Lagerkörper zum insbesondere mehrachsig drehgelenkigen Schwenken relativ zu dem Kuppelkörperträger (13) bildet, **dadurch gekennzeichnet, dass** sie einen an dem Kuppelkörper (15) drehbar gelagerten, ringförmigen Mitnehmerkörper (33) aufweist, der von der Zugkupplungsaufnahme (18) mitnehmbar und relativ zu dem Kuppelkörper (15) verdrehbar ist und einen Bestandteil einer Sensoranordnung (30) zur Erfassung einer Winkelstellung der Zugkupplung (16) relativ zu dem Kuppelkörperträger (13) bildet, dass der Mitnehmerkörper (33), der zum Kontakt mit der Zugkupplung (16) vorgesehen ist, wenn er durch die Zugkupplung (16) verformt ist, eine andere Geometrie aufweist, als im unverformten Zustand, wobei der Mitnehmerkörper (33) ohne Kraftbeaufschlagung im Wesentlichen kreisringförmig ist und eine ovale oder elliptische Form annimmt, wenn er durch die Zugkupplung (16) beaufschlagt ist.

## Claims

1. Trailer coupling for a motor vehicle (12), in particular a passenger car (12), for coupling a trailer (17) to the motor vehicle (12), the trailer coupling comprising a coupling body support (13), which can be mounted on the motor vehicle (12), and a coupling body (15), which is located in a free end region of the coupling body support (13), is spherical on the outside and on which a towing coupling receptacle (18) of a towing coupling (16) of the trailer (17) can be placed, the coupling body (15) forming for the towing coupling receptacle (18) a bearing body for the rotatable mounting of the latter, in particular for its multidirectional pivoting relative to the coupling body support (13), **characterised in that** it comprises an annular driver body (33), which is rotatably mounted on the coupling body (15), can be driven by and rotated relative to the coupling body (15) by the towing coupling receptacle (18), wherein the coupling body (15) has a sensor arrangement (30), in which a component of the sensor arrangement (30), namely at least one sensor (31), is or may be arranged for the detection of an angular position of the towing coupling (16) relative to the coupling body support (13).

2. Trailer coupling according to claim 1, **characterised in that** the coupling body (15) is spherical on the outside and has an equatorial region with a maximum outer circumference between its top side remote from the coupling body support (13) and the coupling body support, and that the driver body (33) is located above or below the equatorial region of the coupling body (15), in particular above or below an equatorial line or an equatorial plane of the coupling body (15), so that the maximum outer circumference of the coupling body (15) in the equatorial region is available for holding the towing coupling receptacle (18).

3. Trailer coupling according to claim 2, **characterised in that** a width of the equatorial region above or below which the driver body (33) is located and in which the coupling body (15) is not weakened by the driver body (33) is dimensioned such that the towing coupling receptacle (18) can, if inclined by a predetermined angle relative to an equatorial plane of the coupling body (15), surround the coupling body (15) in the region of its maximum outer circumference in the equatorial region, the predetermined angle being expediently at least 10 degrees to the horizontal, preferably at least 15 degrees to the horizontal, particularly preferably at least 20 degrees to the horizontal and in particular at least 25 degrees to the horizontal.

4. Trailer coupling according to any of the preceding claims, **characterised in that** the driver body (33) is located below the top side of the coupling body (15), so that there is an upper supporting surface on the top side of the coupling body (15), and/or **in that** the driver body (33) is located approximately in the region of or above a transverse central plane of the coupling body (15), the transverse central plane extending between the top side of the coupling body (15) and an equatorial plane of the coupling body.

5. Trailer coupling according to any of the preceding claims, **characterised in that** the driver body (33) is designed as one-piece ring or formed from at least two ring segments or comprises at least two ring segments.

6. Trailer coupling according to any of the preceding claims, **characterised in that** at least two ring segments of the driver body can be or are joined to one another by means of a latching arrangement and/or at least one clamp and/or by means of bolting and/or by means of a hook arrangement, the at least one clamp expediently comprising a ring which is in particular designed as a circlip having a slot or a recess in the circumferential direction and which can be clipped to the ring segments and extends along a maximum circumference of a ring formed by the ring segments.

7. Trailer coupling according to any of the preceding claims, **characterised in that** the driver body (33) or a driver ring of the driver body (33) provided for contact with the towing coupling is elastically deformable on the coupling body (15), in particular by the towing coupling (16) or a holding jaw (21) of the towing coupling (16) and/or in the sense of an expansion for mounting on the coupling body (15).

8. Trailer coupling according to any of the preceding claims, **characterised in that** at least one eccentric, elastic or non-elastic projection is provided on the driver body (33), and/or **in that** the driver body (33) has driver projections (41) which project radially outwards and are in particular flexible and elastic and/or has a friction-locking surface and/or a convex outer contour and/or slots.

9. Trailer coupling according to any of the preceding claims, **characterised in that** the driver body (33) and/or a bearing region of the coupling body (15) for mounting the driver body (33) is/are provided with a sliding coating or a sliding layer, and/or **in that** the driver body (33) has a bearing element, in particular an antifriction bearing or a roller bearing, for mounting on the coupling body (15).

10. Trailer coupling according to any of the preceding claims, **characterised in that** the driver body (33) is mounted on a bearing receptacle (34), in particular a guide groove (47), of the coupling body (15), which bearing receptacle (34) in particular merges directly into or intersects with a sensor receptacle (32), wherein the bearing receptacle (34) advantageously has in at least one region a depth which is sufficient for completely accommodating a section (64) of the driver body (33), so that the section (64) of the driver body (33) does not project outwards in front of the bearing receptacle (34) at all or only with driver projections (41), and/or wherein a section (65) of the driver body (33) can advantageously be pushed out of the bearing receptacle (34) by the action of the towing coupling receptacle (18) on another section (64) of the driver body (33), in particular by an elastic deformation of the driver body (33) and/or by a displacement of the driver body (33).

11. Trailer coupling according to any of the preceding claims, **characterised in that** the driver body (33) comprises at least one sensor and/or at least one transducer for actuating the at least one sensor (31), in particular a magnet arrangement with at least one magnet (35) and/or an optical transducer, in particular a reflective marking, and/or a magnetised plastic material with magnetic particles, wherein the driver body expediently has at least one receptacle, in particular a pocket, for accommodating the at least one transducer for actuating the at least one sensor, in particular for accommodating a magnet and/or for accommodating the sensor, the receptacle being expediently designed as a plug-in receptacle for inserting the at least one transducer or sensor and/or advantageously having latching means for latching the at least one transducer or sensor.

12. Trailer coupling according to any of the preceding claims, **characterised in that** the sensor assembly (30) has at least one light source with a light emergence region directed towards the driver body (33) for generating a light which can be reflected by the driver body (33), **in that** a light detection region of the at least one optical sensor (31) is oriented for the detection of the reflected light, and **in that** the sensor assembly (30) has signalling means for generating an angle signal which indicates an angular position of the driver body (33) relative to the coupling body support (13), using a measurement signal which can be generated by the at least one optical sensor (31) by means of the light reflected by the driver body (33).

13. Trailer coupling according to any of the preceding claims, **characterised in that** the driver body radially comprises at least two components or layers, and/or **in that** the driver body comprises a base arranged radially inwards relative to the coupling body and an in particular annular driver located on the base radially outwards relative to the coupling body, the driver being provided for rotary drive by the towing coupling receptacle.

14. Trailer coupling according to claim 13, **characterised in that** the base is a multi-part, in particular a two-piece, component, and/or **in that** the base has a receptacle for the driver, wherein, between the driver and the base, there is expediently provided a compression layer, in particular made of polyurethane, which, if pressure is applied to the driver, in particular by the towing coupling receptacle, yields in the direction of the base and facilitates a deformation of the driver in the direction of the base, and/or wherein the driver advantageously is a single piece and so flexible that it can be fitted to or installed into the base already mounted on the coupling body, or wherein it expediently comprises at least two ring segments which can be joined, in particular bolted and/or bonded, to one another or to the base.

15. Trailer coupling according to any of the preceding claims, **characterised in that** the coupling body (15) is a single-piece or a multi-part component, and/or that the sensor receptacle (32) is connected to a connecting passage (48) leading from the coupling body support (13) to the sensor receptacle (32) of the coupling body (15) for the accommodation of a connecting line (55) to the at least one sensor (31), and wherein at least one installation passage (51) extends between the connecting passage (48) and an outer surface of the coupling body support (13) or of the coupling body (15) for installing at least one component of the sensor assembly (30) and/or of the connecting line (55) in the sensor receptacle (32) and/or in the connecting passage (48).

16. Trailer coupling for a motor vehicle (12), in particular a passenger car (12), for coupling a trailer (17) to the motor vehicle (12), the trailer coupling comprising a coupling body support (13), which can be mounted on the motor vehicle (12), and a coupling body (15), which is located in a free end region of the coupling body support (13), is in particular spherical on the outside and on which a towing coupling receptacle (18) of a towing coupling (16) of the trailer (17) can be placed, the coupling body (15) forming for the towing coupling receptacle (18) a bearing body for the rotatable mounting of the latter, in particular for its multidirectional pivoting relative to the coupling body support (13), **characterised in that** it has, rotatably mounted on the coupling body (15), an annular driver body (33) which may be driven by the towing coupling receptacle (18) and is rotatable relative to the coupling body (15) and forms part of a sensor arrangement (30) for detecting an angular position of the towing coupling (16) relative to the coupling body support (13), wherein the coupling body (15) is multi-part.

17. Trailer coupling for a motor vehicle (12), in particular a passenger car (12), for coupling a trailer (17) to the motor vehicle (12), the trailer coupling comprising a coupling body support (13), which can be mounted on the motor vehicle (12), and a coupling body (15), which is located in a free end region of the coupling body support (13), is in particular spherical on the outside and on which a towing coupling receptacle (18) of a towing coupling (16) of the trailer (17) can be placed, the coupling body (15) forming for the towing coupling receptacle (18) a bearing body for the rotatable mounting of the latter, in particular for its multidirectional pivoting relative to the coupling body support (13), **characterised in that** it has, rotatably mounted on the coupling body (15), an annular driver body (33) which may be driven by the towing coupling receptacle (18) and is rotatable relative to the coupling body (15) and forms part of a sensor arrangement (30) for the detection of an angular position of the towing coupling (16), that the driver body (33) is located below the top side of the coupling body (15), so that there is an upper supporting surface on the top side of the coupling body (15), and that at least one eccentric, elastic or non-elastic projection is provided on the driver body (33), and/or that the driver body (33) has driver projections (41) which project radially outwards and are in particular flexible or elastic.

18. Trailer coupling for a motor vehicle (12), in particular a passenger car (12), for coupling a trailer (17) to the motor vehicle (12), the trailer coupling comprising a coupling body support (13), which can be mounted on the motor vehicle (12), and a coupling body (15), which is located in a free end region of the coupling body support (13), is in particular spherical on the outside and on which a towing coupling receptacle (18) of a towing coupling (16) of the trailer (17) can be placed, the coupling body (15) forming for the towing coupling receptacle (18) a bearing body for the rotatable mounting of the latter, in particular for its multidirectional pivoting relative to the coupling body support (13), **characterised in that** it has, rotatably mounted on the coupling body (15), an annular driver body (33) which may be driven by the towing coupling receptacle (18) and is rotatable relative to the coupling body (15), and forms part of a sensor arrangement (30) for detecting an angular position of the towing coupling (16) relative to the coupling body support (13), that the driver body (33) is mounted on a bearing receptacle (34), in particular a guide groove (47), of the coupling body (15), and a section (65) of the driver body (33) can be pushed out of the bearing receptacle (34) by the action of the towing coupling receptacle (18) on another section (64) of the driver body (33), in particular by an elastic deformation of the driver body (33) and/or by a displacement of the driver body (33).

19. Trailer coupling for a motor vehicle (12), in particular a passenger car (12), for coupling a trailer (17) to the motor vehicle (12), the trailer coupling comprising a coupling body support (13), which can be mounted on the motor vehicle (12), and a coupling body (15), which is located in a free end region of the coupling body support (13), is in particular spherical on the outside and on which a towing coupling receptacle (18) of a towing coupling (16) of the trailer (17) can be placed, the coupling body (15) forming for the towing coupling receptacle (18) a bearing body for the rotatable mounting of the latter, in particular for its multidirectional pivoting relative to the coupling body support (13), **characterised in that** it has, rotatably mounted on the coupling body (15), an annular driver body (33) which may be driven by the towing coupling receptacle (18) and is rotatable relative to the coupling body (15), and forms part of a sensor arrangement (30) for detecting an angular position of the towing coupling (16) relative to the coupling body support (13), that the driver body (33), which is provided for contact with the towing coupling (16), has a different geometry when deformed by the towing coupling (16) than in the undeformed state, wherein the driver body (33) without application of force is substantially circular-arc-shaped and adopts an oval or elliptical form when under tension from the towing coupling (16).

## Revendications

1. Attelage de remorque pour un véhicule à moteur (12), en particulier un véhicule à moteur de tourisme (12), pour atteler une remorque (17) au véhicule à moteur (12), avec un support de corps d'attelage (13) pouvant être fixé sur le véhicule à moteur (12) et un corps d'attelage (15) en particulier en forme de boule côté extérieur disposé sur une zone d'extrémité libre du support de corps d'attelage (13), sur lequel peut être placé un logement d'attelage de traction (18) d'un attelage de traction (16) de la remorque (17), dans lequel le corps d'attelage (15) pour le logement d'attelage de traction (18) forme un corps de montage supportant celui-ci de manière rotative pour le pivotement en particulier à trois articulations multiaxiales par rapport au support de corps d'attelage (13), **caractérisé en ce qu'**il présente un corps entraîneur (33) de forme annulaire monté de manière à pouvoir tourner sur le corps d'attelage (15), lequel peut être entraîné par le logement d'attelage de traction (18) et peut tourner par rapport au corps d'attelage (15) et forme un élément constitutif d'un ensemble de capteurs (30) pour détecter une position angulaire de l'attelage de traction (16) par rapport au support de corps d'attelage (13), dans lequel le corps d'attelage (15) présente un logement de capteur (32), dans lequel est ou peut être disposée une composante de l'ensemble de capteurs (30), en particulier au moins un capteur (31), pour détecter une position angulaire de l'attelage de traction (16) par rapport au support de corps d'attelage (13).

2. Attelage de remorque selon la revendication 1, **caractérisé en ce que** le corps d'attelage (15) est côté extérieur en forme de boule et présente entre son côté supérieur opposé au support de corps d'attelage (13) et le support de corps d'attelage une zone équatoriale avec une périphérie extérieure maximale, et que le corps entraîneur (33) est disposé au-dessus ou en dessous de la zone équatoriale du corps d'attelage (15), en particulier au-dessus ou en dessous d'une ligne équatoriale ou d'un plan équatorial du corps d'attelage (15) de sorte que la périphérie extérieure maximale du corps d'attelage (15) dans la zone équatoriale se tient prête pour maintenir le logement d'attelage de traction (18).

3. Attelage de remorque selon la revendication 2, **caractérisé en ce qu'**une largeur de la zone équatoriale, au-dessus ou en dessous de laquelle le corps entraîneur (33) est disposé et dans laquelle le corps d'attelage (15) n'est pas affaibli par le corps entraîneur (33), est dimensionnée de telle sorte que le logement d'attelage de traction (18) peut entourer le corps d'attelage (15) dans la zone de sa périphérie extérieure maximale dans la zone équatoriale pour une position oblique selon un angle prédéfini par rapport à un plan équatorial du corps d'attelage (15), dans lequel l'angle prédéfini est égal de manière opportune à au moins 10 degrés par rapport à l'horizontale, de préférence à au moins 15 degrés par rapport à l'horizontale, de manière particulièrement préférée à au moins 20 degrés par rapport à l'horizontale, en particulier à au moins 25 degrés par rapport à l'horizontale.

4. Attelage de remorque selon l'une quelconque des revendications précédentes, **caractérisé en ce que** le corps entraîneur (33) est disposé en dessous du côté supérieur du corps d'attelage (15) de sorte qu'une surface d'appui supérieure est présente sur son côté supérieur sur le corps d'attelage (15), et/ou que le corps entraîneur (33) est disposé à peu près dans la zone ou au-dessus d'un plan médian transversal du corps d'attelage (15), dans lequel le plan médian transversal s'étend entre le côté supérieur du corps d'attelage (15) et un plan équatorial du corps d'attelage.

5. Attelage de remorque selon l'une quelconque des revendications précédentes, **caractérisé en ce que** le corps entraîneur (33) est configuré en tant qu'un anneau en une partie ou est formé à partir d'au moins deux segments annulaires ou comprend au moins 2 segments annulaires.

6. Attelage de remorque selon l'une quelconque des revendications précédentes, **caractérisé en ce qu'**au moins 2 segments annulaires du corps entraîneur sont reliés ou peuvent être reliés l'un à l'autre au moyen d'un ensemble d'enclenchement et/ou d'au moins une attache et/ou à l'aide d'un vissage et/ou au moyen d'un ensemble formant crochet, dans lequel l'au moins une attache comprend de manière opportune un anneau configuré en particulier en tant qu'anneau de retenue, présentant dans la direction périphérique une entaille ou un évidement, qui peut être clipsé sur les segments annulaires et s'étend sur une plus grande périphérie d'un anneau formé par les segments annulaires.

7. Attelage de remorque selon l'une quelconque des revendications précédentes, **caractérisé en ce que** le corps entraîneur (33) ou un anneau entraîneur, prévu en contact pour le contact avec l'attelage de traction, du corps entraîneur (33) peut être déformé élastiquement en particulier par l'attelage de traction (16) ou une mâchoire de maintien (21) de l'attelage de traction (16), et/ou au sens d'un élargissement pour le montage sur le corps d'attelage (15).

8. Attelage de remorque selon l'une quelconque des revendications précédentes, **caractérisé en ce qu'**au moins une partie faisant saillie excentrique, élastique ou non élastique est disposée sur le corps entraîneur (33), et/ou que le corps entraîneur (33) présente des parties faisant saillie d'entraînement (41) en particulier flexibles ou élastiques faisant saillie radialement vers l'extérieur et/ou une surface de liaison à friction et/ou présente un contour extérieur bombé et/ou des entailles.

9. Attelage de remorque selon l'une quelconque des revendications précédentes, **caractérisé en ce que** le corps entraîneur (33) et/ou une zone de montage du corps d'attelage (15) pour monter le corps entraîneur (33) sont pourvus d'un revêtement glissant ou d'une couche glissante et/ou le corps entraîneur (33) présente un élément de montage, en particulier un palier de roulement ou un palier à rouleaux, destiné à être monté sur le corps d'attelage (15).

10. Attelage de remorque selon l'une quelconque des revendications précédentes, **caractérisé en ce que** le corps entraîneur (33) est monté sur un logement de montage (34) se confondant en particulier directement avec un logement de capteur (32) ou le coupant, en particulier sur une rainure de guidage (47), du corps d'attelage (15), dans lequel le logement de montage (34) présente de manière avantageuse sur au moins une zone une profondeur suffisante pour un logement complet d'une section (64) du corps entraîneur (33) de sorte que la section (64) du corps entraîneur (33) ne fait pas saillie vers l'extérieur devant le logement de montage (34) ou seulement avec des parties faisant saillie d'entraînement (41), et/ou dans lequel de manière avantageuse une section (65) du corps entraîneur (33) peut être poussée par une action exercée par le logement d'attelage de traction (18) sur une autre section (64) du corps entraîneur (33) hors du logement de montage (34), en particulier par une déformation élastique du corps entraîneur (33) et/ou un coulissement du corps entraîneur (33).

11. Attelage de remorque selon l'une quelconque des revendications précédentes, **caractérisé en ce que** le corps entraîneur (33) comprend au moins un capteur et/ou au moins un appareil transmetteur pour actionner l'au moins un capteur (31), en particulier un ensemble magnétique avec au moins un aimant (35) et/ou un appareil transmetteur optique, en particulier un marquage réfléchissant, et/ou un matériau en plastique magnétisé avec des particules magnétiques, dans lequel le corps entraîneur présente de manière opportune au moins un logement, en particulier un compartiment, pour loger l'au moins un appareil transmetteur pour actionner l'au moins un capteur, en particulier pour loger un aimant, et/ou pour loger le capteur, dans lequel le logement est configuré de manière opportune en tant qu'un logement d'enfichage pour enficher l'au moins un appareil transmetteur ou capteur et/ou présente de manière avantageuse des moyens d'enclenchement pour enclencher l'au moins un appareil transmetteur ou capteur.

12. Attelage de remorque selon l'une quelconque des revendications précédentes, **caractérisé en ce que** l'ensemble de capteurs (30) présente au moins une source de lumière avec une zone de sortie de lumière dirigée vers le corps entraîneur (33), pour produire de la lumière pouvant être réfléchie par le corps entraîneur (33), qu'une zone de détection de lumière de l'au moins un capteur optique (31) est mise au point pour détecter la lumière réfléchie, et que l'ensemble de capteurs (30) présente des moyens de signaux pour produire un signal d'angle indiquant une position angulaire du corps entraîneur (33) par rapport au support de corps d'attelage (13) à l'aide d'un signal de mesure, qui peut être produit par l'au moins un capteur optique (31) à l'aide de la lumière réfléchie par le corps entraîneur (33).

13. Attelage de remorque selon l'une quelconque des revendications précédentes, **caractérisé en ce que** le corps entraîneur contient radialement au moins 2 composantes ou couches, et/ou que le corps entraîneur comprend un support disposé radialement à l'intérieur par rapport au corps d'attelage et un entraîneur, en particulier de forme annulaire, disposé radialement à l'extérieur par rapport au corps d'attelage sur le support, dans lequel l'entraîneur est prévu pour l'entraînement en rotation par le logement d'attelage de traction.

14. Attelage de remorque selon la revendication 13, **caractérisé en ce que** le support est en plusieurs parties, en particulier en deux parties, et/ou que le support présente un logement pour l'entraîneur, dans lequel est prévue de manière opportune entre l'entraîneur et le support une couche de compression, en particulier en polyuréthane, qui cède dans le cas d'une action de pression exercée sur l'entraîneur en particulier par le logement d'attelage de traction en direction du support et permet une déformation de l'entraîneur en direction du support, et/ou dans lequel l'entraîneur est de manière avantageuse d'un seul tenant et flexible de telle manière qu'il peut être installé ou introduit sur ou dans le support déjà monté sur le corps d'attelage ou comprend de manière opportune au moins 2 segments annulaires, qui peuvent être reliés, en particulier peuvent être vissés et/ou collés, l'un à l'autre et/ou au support.

15. Attelage de remorque selon l'une quelconque des revendications précédentes, **caractérisé en ce que** le corps d'attelage (15) est d'un seul tenant ou en plusieurs parties et/ou que le logement de capteur (32) est relié de manière opportune à un canal de raccordement (48) menant depuis le support de corps d'attelage (13) vers le logement de capteur (32) du corps d'attelage (15), pour loger une ligne de liaison (55) avec l'au moins un capteur (31) et au moins un canal de montage (51) pour le montage d'au moins un composant de l'ensemble de capteurs (30) et/ou de la ligne de liaison (55) dans le logement de capteur (32) et/ou dans le canal de raccordement (48) s'étend entre le canal de raccordement (48) et une surface extérieure du support de corps d'attelage (13) ou du corps d'attelage (15).

16. Attelage de remorque pour un véhicule à moteur (12), en particulier un véhicule à moteur de tourisme (12), pour atteler une remorque (17) au véhicule à moteur (12), avec un support de corps d'attelage (13) pouvant être fixé sur le véhicule à moteur (12) et un corps d'attelage (15) en particulier en forme de boule côté extérieur disposé sur une zone d'extrémité libre du support de corps d'attelage (13), sur lequel peut être placé un logement d'attelage de traction (18) d'un attelage de traction (16) de la remorque (17), dans lequel le corps d'attelage (15) pour le logement d'attelage de traction (18) forme un corps de montage supportant celui-ci de manière rotative pour le pivotement en particulier à trois articulations multiaxiales par rapport au support de corps d'attelage (13), **caractérisé en ce qu'**il présente un corps entraîneur (33) de forme annulaire monté de manière à pouvoir tourner sur le corps d'attelage (15), lequel peut être entraîné par le logement d'attelage de traction (18) et peut tourner par rapport au corps d'attelage (15) et forme un élément constitutif d'un ensemble de capteurs (30) pour détecter une position angulaire de l'attelage de traction (16) par rapport au support de corps d'attelage (13), dans lequel le corps d'attelage (15) est en plusieurs parties.

17. Attelage de remorque pour un véhicule à moteur (12), en particulier un véhicule à moteur de tourisme (12), pour atteler une remorque (17) au véhicule à moteur (12), avec un support de corps d'attelage (13) pouvant être fixé sur le véhicule à moteur (12) et un corps d'attelage (15) en particulier en forme de boule côté extérieur disposé sur une zone d'extrémité libre du support de corps d'attelage (13), sur lequel peut être placé un logement d'attelage de traction (18) d'un attelage de traction (16) de la remorque (17), dans lequel le corps d'attelage (15) pour le logement d'attelage de traction (18) forme un corps de montage supportant celui-ci de manière rotative pour le pivotement en particulier à trois articulations multiaxiales par rapport au support de corps d'attelage (13), **caractérisé en ce qu'**il présente un corps entraîneur (33) de forme annulaire monté de manière à pouvoir tourner sur le corps d'attelage (15), lequel peut être entraîné par le logement d'attelage de traction (18) et peut tourner par rapport au corps d'attelage (15) et forme un élément constitutif d'un ensemble de capteurs (30) pour détecter une position angulaire de l'attelage de traction (16) par rapport au support de corps d'attelage (13), que le corps entraîneur (33) est disposé en dessous du côté supérieur du corps d'attelage (15) de sorte qu'une surface d'appui supérieure soit présente sur son côté supérieur sur le corps d'attelage (15), et qu'au moins une partie faisant saillie excentrique, élastique ou non élastique est disposée sur le corps entraîneur (33), et/ou que le corps entraîneur (33) présente des parties faisant saillie d'entraînement (41) en particulier flexibles ou élastiques faisant saillie radialement vers l'extérieur.

18. Attelage de remorque pour un véhicule à moteur (12), en particulier un véhicule à moteur de tourisme (12), pour atteler une remorque (17) au véhicule à moteur (12), avec un support de corps d'attelage (13) pouvant être fixé sur le véhicule à moteur (12) et un corps d'attelage (15) en particulier en forme de boule côté extérieur disposé sur une zone d'extrémité libre du support de corps d'attelage (13), sur lequel peut être placé un logement d'attelage de traction (18) d'un attelage de traction (16) de la remorque (17), dans lequel le corps d'attelage (15) pour le logement d'attelage de traction (18) forme un corps de montage supportant celui-ci de manière rotative pour le pivotement en particulier à trois articulations multiaxiales par rapport au support de corps d'attelage (13), **caractérisé en ce qu'**il présente un corps entraîneur (33) de forme annulaire monté de manière à pouvoir tourner sur le corps d'attelage (15), lequel peut être entraîné par le logement d'attelage de traction (18) et peut tourner par rapport au corps d'attelage (15) et forme un élément constitutif d'un ensemble de capteurs (30) pour détecter une position angulaire de l'attelage de traction (16) par rapport au support de corps d'attelage (13), que le corps entraîneur (33) est monté sur un logement de montage (34), en particulier sur une rainure de guidage (47), du corps d'attelage (15) et une section (65) du corps entraîneur (33) peut être poussée par une action exercée par le logement d'attelage de traction (18) sur une autre section (64) du corps entraîneur (33) hors du logement de montage (34), en particulier par une déformation élastique du corps entraîneur (33) et/ou un coulissement du corps entraîneur (33).

19. Attelage de remorque pour un véhicule à moteur (12), en particulier un véhicule à moteur de tourisme (12), pour atteler une remorque (17) au véhicule à moteur (12), avec un support de corps d'attelage (13) pouvant être fixé sur le véhicule à moteur (12) et un corps d'attelage (15) en particulier en forme de boule côté extérieur disposé sur une zone d'extrémité libre du support de corps d'attelage (13), sur lequel peut être placé un logement d'attelage de traction (18) d'un attelage de traction (16) de la remorque (17), dans lequel le corps d'attelage (15) pour le logement d'attelage de traction (18) forme un corps de montage supportant celui-ci de manière rotative pour le pivotement en particulier à trois articulations multiaxiales par rapport au support de corps d'attelage (13), **caractérisé en ce qu'**il présente un corps entraîneur (33) de forme annulaire monté de manière à pouvoir tourner sur le corps d'attelage (15), lequel peut être entraîné par le logement d'attelage de traction (18) et peut tourner par rapport au corps d'attelage (15) et forme un élément constitutif d'un ensemble de capteurs (30) pour détecter une position angulaire de l'attelage de traction (16) par rapport au support de corps d'attelage (13), que le corps entraîneur (33) qui est prévu pour le contact avec l'attelage de traction (16) lorsqu'il est déformé par l'attelage de traction (16), présente une autre géométrie que dans l'état déformé, dans lequel le corps entraîneur (33) est sans sollicitation de force sensiblement en forme d'anneau de cercle et adopte une forme ovale ou elliptique lorsqu'il est sollicité par l'attelage de traction (16).
